# EUROPEAN PATENT APPLICATION

(11) **EP 4 721 934 A1**
(43) Date of publication of application: **08.04.2026**
(21) Application number: 25207257.4
(22) Date of filing: 07.10.2025
(51) Int. Cl.: B25J 15/00, B25J 15/06, B25J 19/02

(54) **ROBOTIC END-OF-ARM TOOL FOR BAGGAGE HANDLING**

(30) Priority: 07.10.2024 US 202463704250 P
(71) Applicant: Journey Robotics, Inc., Mars, PA 16046 (US)
(72) Inventor: ALLEN, Arthur Reeg, Mars, 16046 (US); NICELY, Aaron Paul, Mars, 16046 (US)
(74) Representative: Mathys & Squire

(57) **Abstract**

An end-of-arm tool for robotic baggage handling including a vacuum head assembly, a linear slide mechanism, passive and active tilt assemblies, and a vacuum head pivot assembly. The tool is designed to efficiently and safely handle luggage to or from Unit Load Devices (ULDs) or baggage carts, addressing challenges in airport baggage handling operations. The end-or-arm tool improves upon existing techniques by providing flexibility in luggage orientation, precise control through advanced sensing, and the ability to handle bags up to 75 lbs. The end-of-arm tool is compatible with various robotic arm systems and significantly enhances the efficiency, safety, and reliability of luggage handling in airport environments.

## Description

### TECHNICAL FIELD

This document pertains generally to robotic systems for baggage handling in airports, specifically an end-of-arm tool designed to efficiently and safely handle luggage to or from Unit Load Devices (ULDs), baggage carts, or other similar structures encountered within airport or other travel ports.

### BACKGROUND

The process for checked baggage handling in most airports has remained largely unchanged for decades, relying on manual labor for loading and unloading luggage. This process is associated with injuries, inconsistencies, and damage to luggage. Previous attempts to automate this process have been unsuccessful due to various limitations, including space constraints in enclosed carts with hard roofs, difficulty in reliably gripping and stacking deformable bags, and the high frequency of bags weighing over 35 lbs., up to 75 lbs. Existing robotic solutions have struggled with limited vacuum suction, space constraints, and the inability to reorient to pick bags that are not lying flat.

### OVERVIEW

Within the baggage handling environment, the use of robotics, which has been limited to only the loading of carts to date, has failed to meet speed, utilization of cart space, or adaptability to current airport infrastructure requirements (such as ceiling height or floor space restrictions) and therefore has not been widely adopted across the market. Additionally, the previous robotic solutions have struggled with limited vacuum suction, space constraints, and the inability to reorient to pick bags that are not lying flat due to using gripper technologies that pick up or hold bags from the larger top or bottom surface of a bag.

The challenges that have limited the use of robotics in airport baggage handling operations to date mainly stem from three different factors:
1. The use of enclosed carts with hard roofs creates tight spaces that make it difficult to reliably maneuver a gripper and robot in and out of.
2. The deformable nature of bags makes it hard to reliably grip and stack bags without them becoming an entangled mess
3. The high frequency of bags weighing over 35 lbs., to as high as 75 lbs.

The present inventors have developed an end of arm tool and related control techniques to address the issues outlined above by providing a robotic arm capable of picking luggage from any position within a cart or ULD, eliminating the need for human intervention or pre-staging. The device's advanced sensing capabilities, including 3D sensing and distance sensors, ensure precise and efficient operation. The vacuum head can orient through 120 degrees of tilt and includes passive tilting to accommodate misalignments, self-centering after each use. The vacuum head also independent from the tilt mechanism can be pivoted to adjust height according to particular baggage handling tasks. The device utilizes a linear slide mechanism to allow the head to extend towards the luggage and retract to bring the center of gravity closer to the robotic arm, facilitating easier and quicker movement.

In an example, the end-of-arm tool (EOAT) is designed to mount on a robotic system for handling luggage from ULDs or baggage carts. Key features in this example include compatibility with various robotic arms, capacity to handle luggage up to 75 lbs., a suction/vacuum system for secure gripping, a linear slide mechanism for extending and retracting the head, passive and active tilt mechanisms for alignment flexibility, head height adjustment above and below the forks (linear rails), advanced sensing capabilities including RGB and stereo vision, Time Of Flight (ToF) sensors, and other distance sensing, and prong forks for supporting luggage weight and shifting the center of gravity.

The EOAT discussed herein includes the following non-limiting examples:
Example 1 is an end-of-arm tool for robotic baggage handling, comprising a vacuum head assembly including a vacuum head housing and a foam seal configured to engage a piece of luggage through vacuum suction, a head positioning mechanism including an active tilt mechanism configured to provide angular movement of the vacuum head assembly, a head positioning mechanism including an active height adjustment mechanism configured to provide height adjustment of the head relative to the fork position in both a positive and negative direction, and a platform assembly including a linear slide mechanism configured to extend and retract the vacuum head assembly along a longitudinal axis of a pair of linear rails configured to support the piece of luggage when the vacuum head assembly is retracted. 1

In Example 2, the subject matter of Example 1 further comprises a sensor assembly configured to provide position, orientation, depth, and feature data related to the piece of luggage.

In Example 3, the subject matter of any one of Examples 1 and 2 wherein the active tilt mechanism provides at least 120 degrees of angular movement of the vacuum head assembly.

In Example 4, the subject matter of any one of Examples 1 to 3 wherein the vacuum head assembly further comprises a regenerative blower suction system.

In Example 5, the subject matter of any one of Examples 1 to 4 wherein a regenerative blower suction system is coupled to the vacuum head assembly via a vacuum hose.

In Example 6, the subject matter of Example 5 wherein the vacuum hose is coupled to the vacuum head assembly via a pivoting snorkel assembly.

In Example 7, the subject matter of any one of Examples 1 to 6 wherein the head positioning mechanism further includes a passive tilt mechanism configured to provide automatic alignment and self-centering.

In Example 8, the subject matter of Example 7 wherein the passive tilt mechanism includes passive head tilt bias members disposed within passive head tilt cavities in the vacuum head housing.

In Example 9, the subject matter of any one of Examples 1 to 8 wherein the active tilt mechanism comprises tilt four bar linkages coupled to tilt levers and head tilt actuators operatively connected to the tilt four bar linkages to control the angular movement of the vacuum head assembly.

In Example 10, the subject matter of Example 9 wherein the tilt four bar linkages are configured to produce the full range of tilt motion with approximately fifty millimeters of actuator travel.

In Example 11, the subject matter of any one of Examples 1 to 10 wherein the head positioning mechanism further includes a head pivot system configured to pivot the vacuum head assembly in a direction perpendicular to the linear rails.

In Example 12, the subject matter of any one of Examples 1 to 11 wherein the vacuum head assembly includes a vacuum snorkel assembly with a snorkel pivot housing and a snorkel fixed housing configured to maintain vacuum pressure throughout a pivot range of the vacuum head assembly.

In Example 13, the subject matter of any one of Examples 1 to 12 wherein the foam seal is adhered to a removable foam seal frame secured to the vacuum head housing with screws captured within the vacuum head housing.

In Example 14, the subject matter of any one of Examples 1 to 13 wherein the linear slide mechanism includes a linear actuator, the pair of linear rails, and linear bearings movably disposed on the pair of linear rails and supporting the vacuum head assembly and head positioning mechanism.

In Example 15, the subject matter of Example 14 wherein the linear actuator is pneumatically or electrically actuated.

In Example 16, the subject matter of any one of Examples 1 to 15 wherein the sensor assembly includes a lighting module, stereo vision cameras, and distance sensors.

In Example 17, the subject matter of any one of Examples 1 to 16 wherein the vacuum head assembly includes integrated distance sensors.

In Example 18, the subject matter of any one of Examples 1 to 17 further comprising a robot mount configured to interface with at least one of 6DOF industrial robotic arms, custom robotic designs, or XY gantry systems.

In Example 19, the subject matter of any one of Examples 1 to 18 wherein the end-of-arm tool is configured to handle luggage weighing up to 75 pounds.

Example 20 includes an end-of-arm tool for robotic baggage handling comprising a vacuum head coupled to a vacuum generation system, a linear slide mechanism for extending and retracting the vacuum head, a tilt mechanism coupled to the vacuum head enabling up to 120 degrees of angular movement of the vacuum head relative to the linear slide mechanism, a sensor module including stereo vision and distance sensing capabilities, and a pair of linear rails movably supporting the tilt mechanism and configured to support a piece of luggage during handling.

In Example 21, the subject matter of Example 20 wherein the vacuum head includes a foam seal affixed to a frame configured to engage various luggage designs and materials.

In Example 22, the subject matter of any one of Examples 20-21 further comprising a robot mount compatible with 6DOF industrial arms, custom designs, and XY Gantry systems.

In Example 23, the subject matter of any one of Examples 20 to 22 wherein the tilt mechanism includes an active tilt assembly.

In Example 24, the subject matter of Example 23 wherein the active tilt assembly includes a tilt actuator coupled to a four-bar mechanism.

In Example 25, the subject matter of any one of Examples 20 to 23 wherein the tilt mechanism includes a passive tilt mechanism.

These examples can be combined in any permutation or combination. This overview is intended to provide an overview of subject matter of the present patent application. It is not intended to provide an exclusive or exhaustive explanation of the invention. The detailed description is included to provide further information about the present patent application.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIGS. 1A-1G are system diagrams illustrating an example baggage handling end effector in operation with various robotic systems according to various example embodiments.
FIGS. 2A-2G are system diagrams illustrating an example baggage handling end effector performing basic baggage handling functions according to an example embodiment.
FIG. 3 is a perspective view of an example baggage handling system utilizing the end of arm tool for loading or unloading a baggage cart according to an example embodiment.
FIGS. 4A-4D are various views of an example end of arm tool designed for picking up individual pieces of luggage within an airport environment according to an example embodiment.
FIGS. 5A-5F are various views of a vacuum head positioning mechanism used within an end of arm tool designed for handling individual pieces of luggage according to an example embodiment.
FIGS. 6A-6E are various view of a vacuum head used within an end of arm tool designed for handling individual pieces of luggage according to an example embodiment.
FIGS. 7A-7F are side views of the end of arm tool for handling luggage demonstrating range of motion of the vacuum head and related components.
FIGS. 8A-11C are various side view illustrations depicting various luggage picking techniques enabled by the end of arm tool according to various example embodiments.

### DETAILED DESCRIPTION

In an example, the end-of-arm tool (EOAT) for robotic baggage handling comprises a vacuum head coupled to a suction/vacuum system designed to grip luggage securely. The head is mounted on a linear slide assembly that moves towards the luggage to engage the vacuum grip. The head's foam design around a structured frame provides compliance to accommodate various luggage designs and materials.

The end effector is designed to mount on a robotic system to handle luggage from a Unit Load Device (ULD) or Baggage Cart. The end effector can be mounted on a variety of robotic arms with different degrees of freedom (DOFs), including 6DOF industrial arms, custom designs, and XY Gantry systems. It is designed for handling luggage up to 75 lbs., which is the current maximum weight target for individual bags. However, minor design changes to the vacuum system and parts of the linear actuation systems would easily allow for increasing the luggage weight limit should that be needed in the future.

In an example, the end effector uses a regenerative blower suction system to grip the luggage securely and significant air flow needed for overcoming material porosity and leaks around the suction foam seal and the luggage surface (any type of blower system can be used with sufficient air flow to maintain around 5-6 pounds per square inch (PSI) of vacuum when attached to a piece of luggage). As discussed further below, other techniques for vacuum engagement with luggage can be adapted for use with the EOAT designed discussed herein. The vacuum head assembly of the end effector is mounted on a linear slide, which moves towards the luggage to engage the vacuum grip. The head's foam design around a structured frame provides the necessary compliance to accommodate various luggage designs and materials, ensuring a reliable and strong vacuum hold.

The head features both passive and active tilt mechanisms. The passive tilt allows for minor misalignments, while the active tilt provides up to 120 degrees of angular movement in this example, other examples could incorporate more or less active tilt. This flexibility enables the robotic arm to pick luggage from various orientations, including from the top surface of the luggage bag if the robot turns the end effector upside down.

The EOAT is equipped with cameras and sensors for depth and RGB data, pressure sensors, positioning sensors, and lighting mounted either inside the head or on the EOAT in a separate module for precise measurements and computer vision control. The linear rails can include distance sensors and auxiliary lighting to enhance situational awareness and control.

When picking luggage from the front face, once vacuum is made, the head retracts on through activation of a linear actuator, pulling the luggage onto the linear rails that support its weight and shift the center of gravity towards the robotic arm. For traditional vacuum gripper top face picks, the device inverts the EOAT, tilts the head, and retracts the linear actuator for controlled center of gravity manipulation.

The EOAT and related operational technique addresses the challenges that have limited the use of robotics in airport baggage handling operations, including the use of enclosed carts with hard roofs, the deformable nature of bags, and the high frequency of heavy bags. By providing a robotic arm capable of picking luggage from any position within a cart or ULD, it eliminates the need for human intervention or pre-staging.

The advanced sensing capabilities, including 3D sensing and distance sensors, ensure precise and efficient operation. The vacuum head's ability to orient from a -30-degree downward tilt position to a 90-degree vertical tilt position (for 120 degrees of motion relative to the linear rails of the platform assembly discussed below) and freely pivot to accommodate misalignments, self-centering after each use, provides the necessary flexibility for handling various luggage orientations.

The linear slide mechanism (also referenced herein as the platform assembly) allows the head to extend towards the luggage and retract to bring the center of gravity closer to the robotic arm, facilitating easier and quicker movement. This innovative design significantly improves the efficiency, safety, and reliability of luggage handling compared to existing methods.

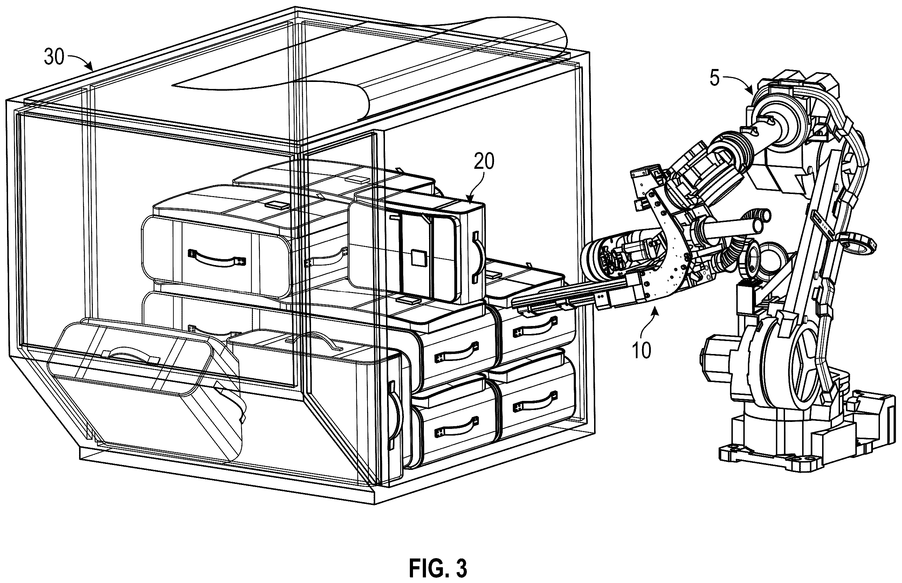

The EOAT designs detailed herein are designed to provide the following functional capabilities when paired with a robotic arm or gantry system. In an example, the baggage handling end effector 10 (also referenced herein as the End-Of-Arm Tool (EOAT) 10) comprises an integrated robotic gripper system designed for autonomous baggage handling operations. An example mechanical design for the EOAT 10 is discussed below in reference to FIGS. 3-7F. The system incorporates multiple coordinated subsystems that provide comprehensive object manipulation capabilities.
Head Assembly and Positioning System - The EOAT 10 features a movable head assembly (vacuum head assembly 100) mounted on a linear slide mechanism (end effector platform assembly 400 or simply platform assembly 400) that enables bidirectional translation along a longitudinal axis. The head assembly can extend forward to engage target objects and retract backward to facilitate transport operations. Within this document backward and forward are relative to the robot mount 430 of EOAT 10, the robot mount 430 is considered adjacent a proximal, backward, or rearward end of EOAT 10. This linear slide mechanism is engineered to operate effectively in any spatial orientation, providing operational flexibility regardless of the robotic arm's position or the EOAT's mounting configuration.

The head assembly and/or linear slide mechanism incorporates built-in passive compliance systems that automatically adapt to varying pressures and forces encountered during object engagement. This compliance functionality prevents damage to handled objects while maintaining optimal vacuum seal integrity at the grasping interface.
Vacuum Grasping System - The head assembly utilizes a vacuum system to securely grasp luggage, bags, and other objects through controlled suction. In an example, the vacuum system includes a regenerative blower to generate vacuum that is delivered to the head assembly via hose coupled to a snorkel. The vacuum system can be dynamically controlled, allowing operators to engage the vacuum for object acquisition and disengage it for controlled release operations. This dual-function capability enables both loading and unloading operations from baggage carts and Unit Load Devices (ULDs). In an example, the regenerative blower is utilized to generate a high air flow vacuum to the vacuum head assembly. In other examples, different vacuum generation techniques can be utilized as well as different vacuum head configurations. For example, a plurality of smaller vacuum cup can be arrayed across the forward face of the vacuum head assembly. In other examples of vacuum gripper solutions can also be incorporated, such as FormHand discussed in Löchte, Christian & Kunz, Holger & Schnurr, Raphael & Langhorst, Sören & Dietrich, Franz & Raatz, Annika & Dilger, Klaus & Dröder, Klaus. (2014). Form-Flexible Handling and Joining Technology (FormHand) for the Forming and Assembly of Limp Materials. Procedia CIRP. 23. 10.1016/j.procir.2014.10.086.
Multi-Axis Orientation Control - The head assembly features comprehensive tilt capabilities, including both active and passive tilt mechanisms. The active tilt mechanism provides up to 120 degrees of angular adjustment, enabling the head to adapt to various surface orientations and object configurations. Additionally, the head can achieve a 90-degree upward orientation, specifically designed to facilitate overhead grasping operations when the EOAT is inverted. In certain examples, the head assembly is coupled to an additional pivot assembly that provides extended head assembly movement in addition to the 120 degree tilt.

The passive tilt mechanism provides additional object protection, surface alignment, and conformance capabilities through spring-loaded (or similar biasing members) compliance systems that automatically adjust to surface irregularities and misalignments.

The vacuum head assembly also features a head height adjustment (e.g., pivot) capability that allows the head to raise and lower independently of the fork position and the head tilt position. This feature allows the head to position itself higher or lower on a given luggage face while maintaining the fork position relative to the bottom of the luggage surface. Head height adjustment enables the head to adjust for things like handles, wheels, recesses, protrusions, or any other reason for adjusting height for optimal picking success. This feature also allows the head, when fully extended, to be lowered below the forks. Lowering the vacuum head below can assist with picking top row bags that are near or touching the roof by collapsing the height profile to its smallest size and reaching in to pick a top row bag. The EOAT positioning with the vacuum head below the forks (linear rails) can also be used on bottom bags touching the floor. Picking a bag in this orientation can also involve the forks being tilted in a pitched down approach with the vacuum head extended and the vacuum head lowered in front of the forks with the head tilted up to match the front surface of the bag. This keeps the forks and EOAT away from the bottom surface and allows extremely low height bags to be picked from the bottom quickly.
Integrated Sensing and Illumination Systems - The EOAT 10 incorporates a sensor module 500 that can include multiple sensing modalities that function continuously, even during active grasping operations. A stereo vision, time-of-flight (ToF), or Lidar camera coupled with an RGB (red-green-blue) camera system can provide three-dimensional spatial awareness and object recognition capabilities. In some examples, a distance sensor can be added to provide added range measurements and positioning feedback. Both sensing systems are integrated within the EOAT assembly and maintain functionality regardless of head orientation or engagement status. In certain examples, some or all of the distance sensing capabilities can reside within the head assembly. For example, the central portion of the head assembly (vacuum head assembly 100) can include one or more laser range finding sensors to provide distance sensing. Different baggage handling scenarios can involve different combinations of cameras and/or sensors described herein.

Integrated illumination systems provide consistent lighting at any head orientation, ensuring optimal visibility for both human operators and machine vision systems during detection and grasping operations.
Compliant Interface and Protection Systems - The head assembly features a specialized compliant membrane (e.g., foam seal 110) that serves multiple critical functions. This membrane ensures optimal vacuum seal performance by conforming to object surface irregularities, provides additional mechanical compliance when other systems reach their limits, and acts as a protective interface surface to prevent damage to handled objects. This can be a simple single foam layer, multiple layers of foam to create several layers of different conformal foam, and even a hybrid combining the foam and a flap seal made of silicone, ethylene propylene diene monomer (EPDM) or similar material that can seal off air leaks where the foam fails to seal. As noted above, other compliant interface systems can be adapted for use with the EOAT design discussed herein.
Structural Support System - The EOAT 10 incorporates fork assemblies (e.g., linear rails 420A, 420B) designed to support object weight during transport operations. When the head retracts after initial object engagement, these forks provide structural support and facilitate center-of-gravity management for improved handling stability and reduced strain on the robotic manipulation system. These forks (e.g., linear rails) also act as a structural backbone to the assembly and create moment and torque stability to the linear actuator.
Operational Versatility - The system demonstrates comprehensive operational flexibility, capable of handling objects at any angle or orientation. The EOAT 10 can operate in standard configuration or inverted mode to access objects from top surfaces, providing additional reach capabilities and expanded operational envelopes. The system can accommodate objects within fully enclosed containers with roof constraints, demonstrating superior accessibility compared to conventional handling systems.

The EOAT 10 provides bidirectional functionality, capable of both loading objects into containers and unloading them from baggage carts or ULDs, making it suitable for complete baggage handling workflows in airport and logistics environments.

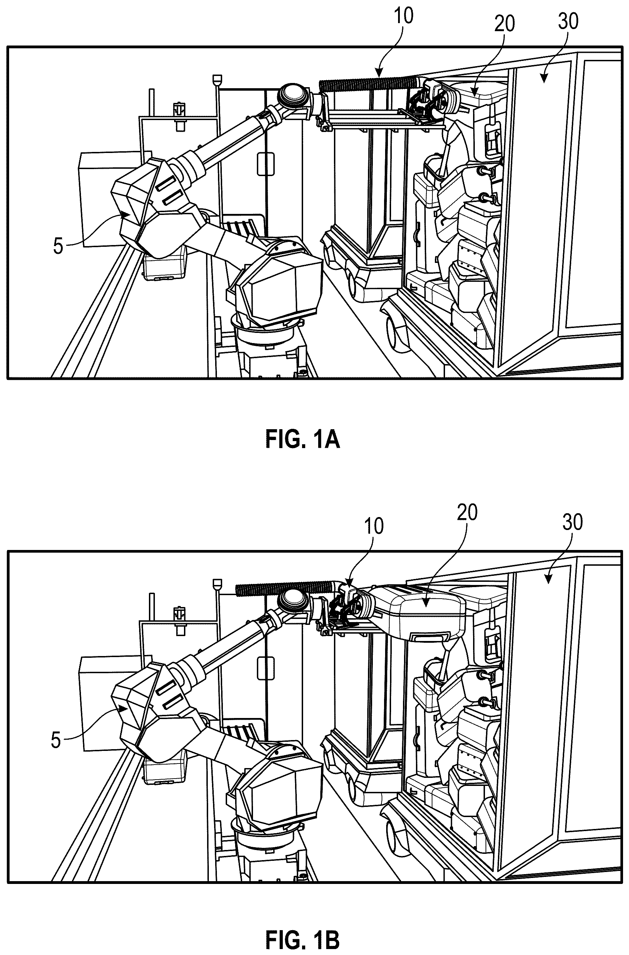

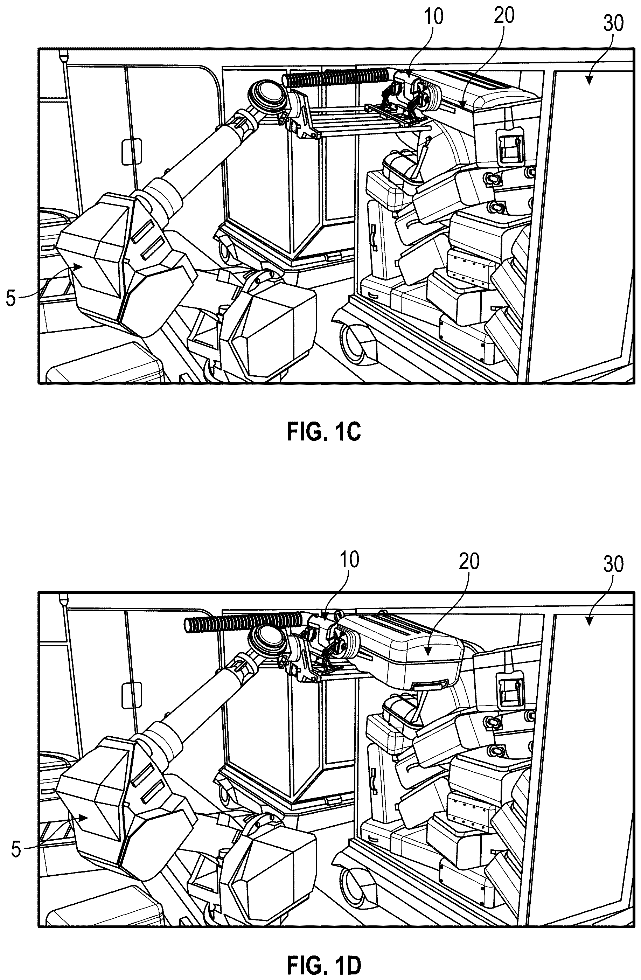

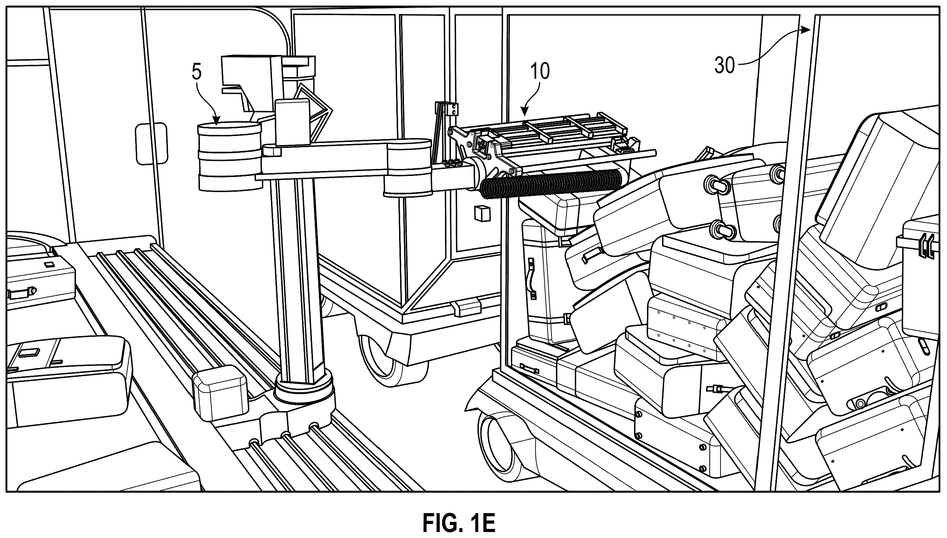

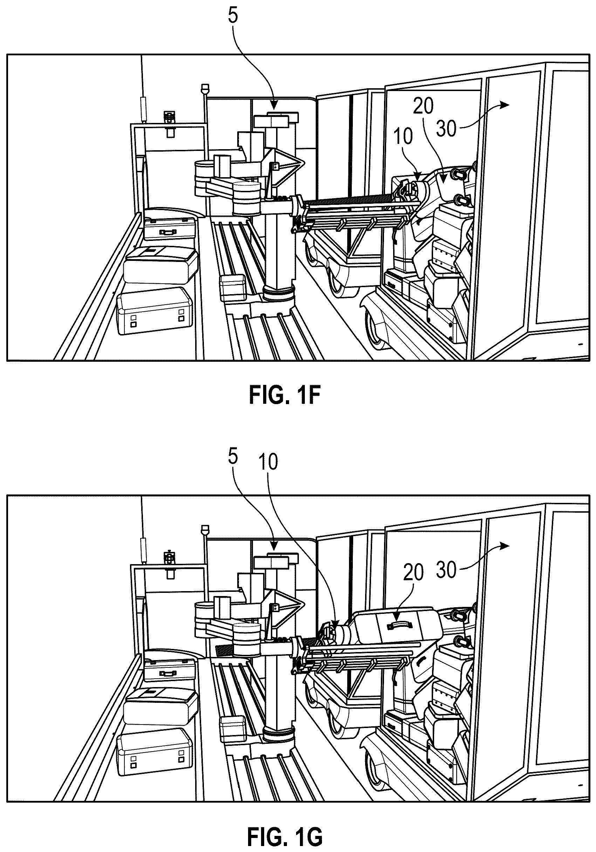

FIGS. 1A-1G are system diagrams illustrating an example baggage handling end of arm tool (EOAT 10) in operation with various robotic systems. In these figures, an example baggage handling system including a robotic arm and EOAT 10 are illustrated performing various basic luggage handling operations. FIGS. 1A and 1B illustrate the robotic arm 5 positioning the EOAT 10 adjacent a bag 20 within a ULD 30. FIGS. 1C and 1D illustrate the EOAT 10 retracting a vacuum head assembly to pull the bag 20 out of the ULD 30 and onto the linear rails (forks) of the EOAT 10. FIG. 1E illustrates a robotic arm 5 positioning an inverted EOAT 10 to pick a bag from a ULD 30. FIG. 1F illustrates the robotic arm 5 positioning the EOAT 10 to pick bag 20 from the ULD 30-here the illustration demonstrates a technique for dealing with tilted bags. In FIG. 1G, the EOAT 10 retracts the vacuum head to pull the bag 20 from the ULD 30 onto the main platform of EOAT 10.

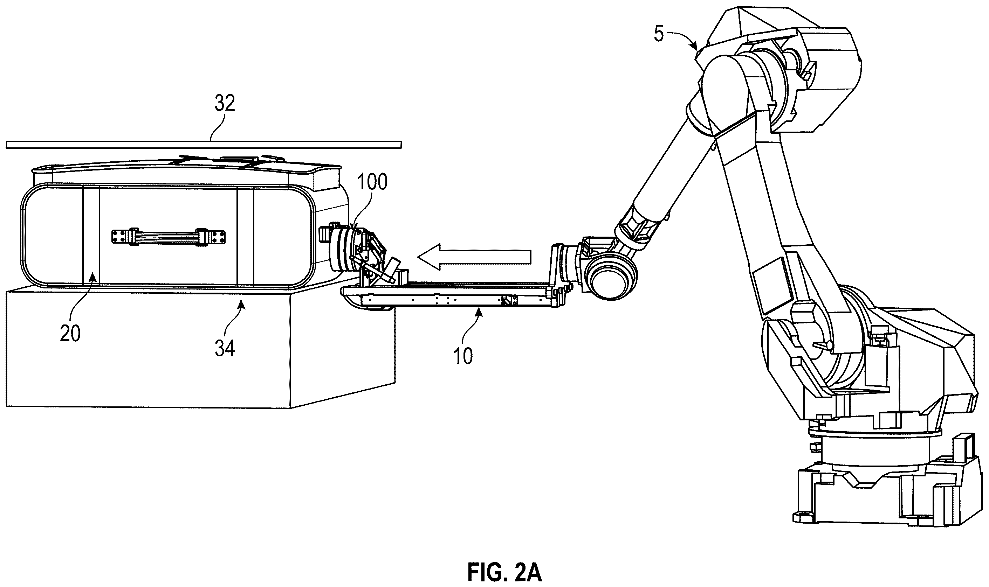

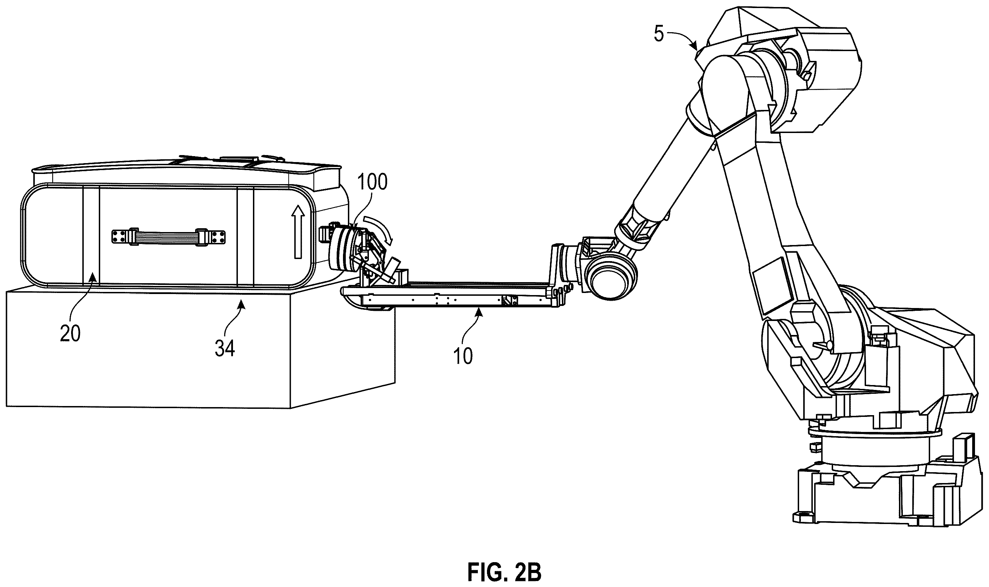

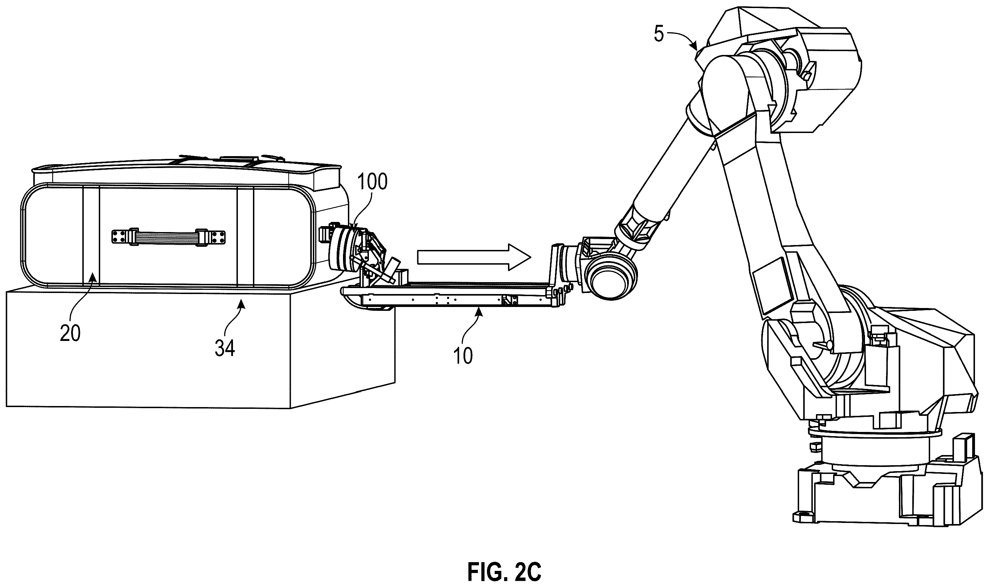

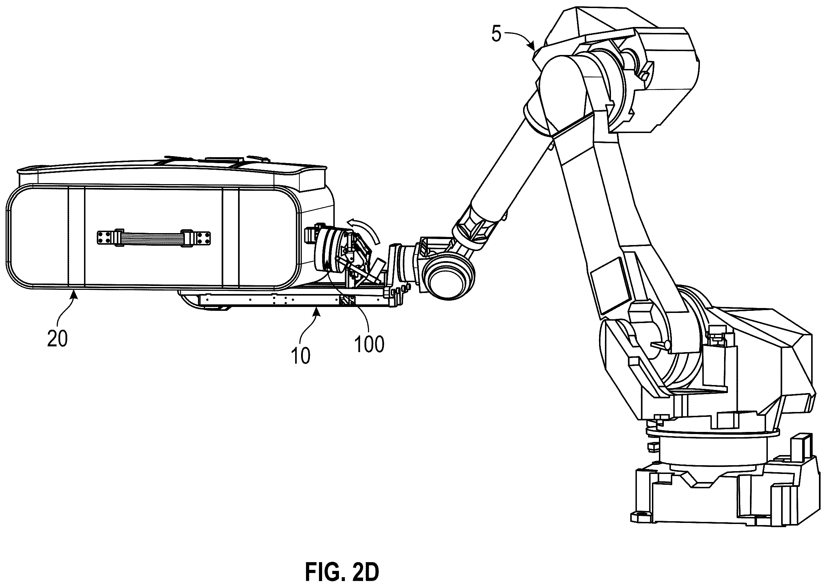

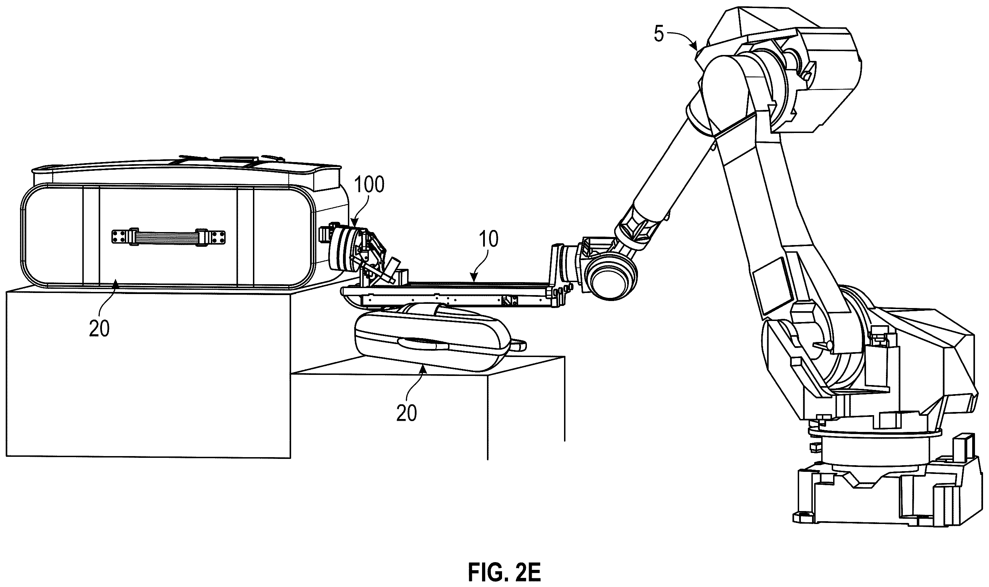

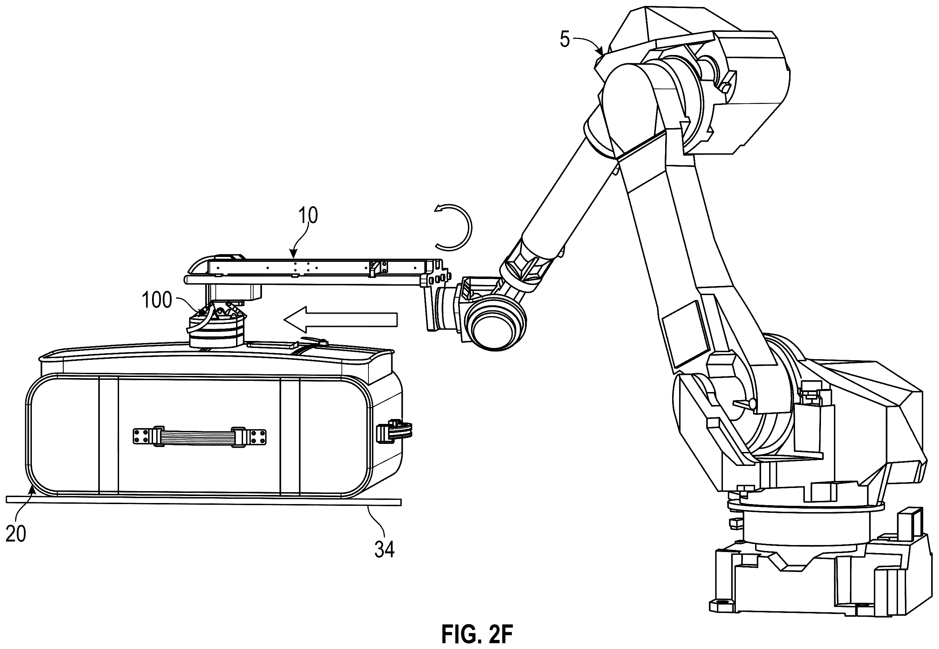

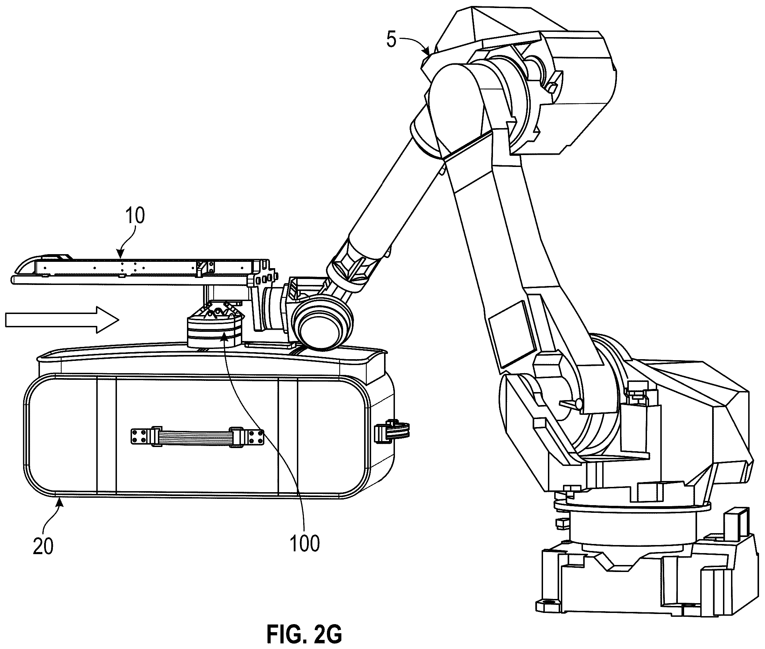

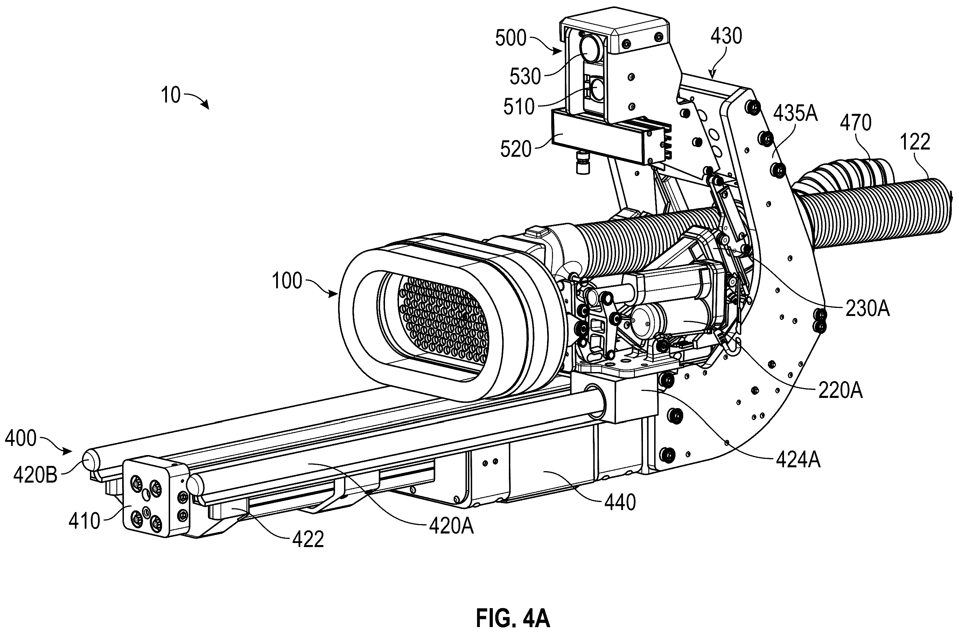

FIGS. 2A-2G are system diagrams illustrating an example baggage handling end of arm tool (EOAT) performing basic baggage handling functions. In these examples, a single bag (bag 20) is handled by EOAT 10 on robot 5. These figures are intended to demonstrate common functions performed by the EOAT 10 discussed through this disclosure. In FIG. 2A, the vacuum head assembly 100 of EOAT 10 is in a forward position to engage bag 20. The bag 20 is sandwiched between a bag, object, or floor 34 of a ULD 30 and a ceiling or obstruction 32. FIG. 2B illustrates a head tilt function of EOAT 10, where the vacuum head assembly 100 is tilted to lift a leading edge of bag 20 to reduce resistance to sliding the bag 20 onto the forks (also discussed herein as linear rails) of EOAT 10. In FIG. 2C, the EOAT 10 starts to retract vacuum head assembly 100 to pull the bag 20 onto the linear rails of EOAT 10. In FIG. 2D, the vacuum head assembly 100 and bag 20 are fully retracted on the linear rails and the system can now freely move the bag 20 onto a conveyor or into another ULD or luggage cart. FIG. 2E illustrates an alternative bag handling scenario where the system (EOAT 10 and robot 5) reach over another bag to engage the target bag. FIG. 2F illustrates use of EOAT 10 in an inverted position to engage a top surface of a bag 20. In this scenario, the vacuum head assembly 100 is tilted to ninety (90) degrees back towards the robot 5 and the robot 5 inverts the EOAT 10 such that the vacuum head assembly 100 can engage a superior exposed surface of bag 20. As illustrated in FIG. 2G, once the bag 20 is engaged vertically, the vacuum head assembly 100 can be retracted holding the bag 20 with vacuum suction alone. Example mechanisms to enable the functions illustrated in FIGS. 2A-2G are discussed below in reference to FIGS. 4A-4D.

FIG. 3 is a perspective view of an example baggage handling system utilizing the end of arm tool for loading or unloading a baggage cart according to an example embodiment. FIG. 3 illustrates another baggage handling system including a robot 5 and EOAT 10 designed to load or unload bags, such as bag 20, into or out of ULD 30.

The following section of the disclosure is focused on the baggage handling end effector 10 (also referenced herein as the End-Of-Arm Tool (EOAT) 10), which comprises an integrated robotic gripper system designed for autonomous baggage handling operations in airport environments. The EOAT 10 addresses long-standing challenges in airport baggage handling by providing a robotic solution capable of picking luggage from any position within Unit Load Devices (ULDs) or baggage carts, eliminating the need for human intervention or pre-staging operations.

The system incorporates multiple coordinated subsystems that provide comprehensive object manipulation capabilities for handling luggage weighing up to 75 pounds. The EOAT 10 is designed to mount on various robotic systems, including 6DOF industrial robotic arms, custom robotic designs, and XY gantry systems, providing operational flexibility across different automation platforms.

The EOAT 10 integrates four primary functional subsystems: vacuum head assembly 100 for secure luggage engagement through vacuum suction; head positioning mechanism 200 providing multi-axis orientation control including active and passive tilt and vertical height adjustment capabilities; platform assembly 400 containing linear slide mechanisms for extending and retracting operations; and sensor assembly 500 for delivering real-time position and orientation data for precision control.

The vacuum head assembly 100 can utilize a regenerative blower or similar suction generation system coupled with a compliant foam seal 110 that conforms to irregular luggage surfaces, ensuring reliable vacuum hold across various bag designs and materials. The head positioning mechanism 200 features both active tilt providing up to 120 degrees of angular movement (e.g., -30 degrees to 90 degrees relative to the linear rails 420) and passive tilt mechanisms with bias members for automatic alignment and surface conformance as well as an independent height adjustment for moving the head distance to the forks higher or lower and even below.

The system demonstrates comprehensive operational versatility, capable of handling luggage at any angle or orientation within enclosed containers with roof constraints. The EOAT 10 can operate in standard configuration for front-face engagement or inverted mode to access luggage from top surfaces, with the vacuum head assembly 100 capable of tilting to approximately 90 degrees for overhead grasping operations when the EOAT is inverted.

When engaging luggage, the linear slide mechanism (platform assembly 400) extends the vacuum head assembly 100 forward for initial contact, after which the head retracts to pull luggage onto linear rails 420A, 420B that provide structural support and facilitate center-of-gravity management during transport operations. The integrated sensor assembly 500 provides continuous sensing capabilities throughout all phases of operation, maintaining functionality regardless of head orientation or engagement status.

This innovative design significantly improves the efficiency, safety, and reliability of luggage handling compared to existing manual methods while addressing the three primary challenges that have limited robotic adoption: space constraints in enclosed carts, difficulty gripping deformable bags, and handling of heavy luggage up to 75 pounds.

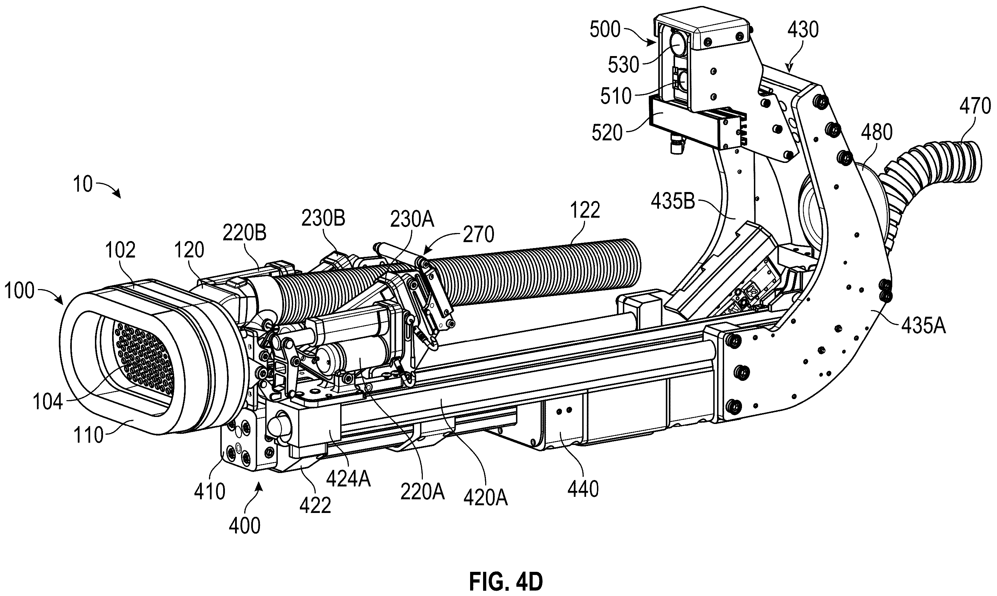

FIGS. 4A-4D are various views of an example end of arm tool designed for picking up individual pieces of luggage within an airport environment according to an example embodiment. These figures focus on illustrating various components and assemblies within EOAT 10. In this example, EOAT 10 includes a vacuum head assembly 100, head positioning mechanism 200, platform assembly 400, and sensor assembly 500. The EOAT 10 also includes various cable harnesses (not specifically illustrated), vacuum hose 122, and air lines for operation of linear actuator 410. In FIG 4D robot mount brackets 435A and 435B are EOAT structures but also provide mounting for controllers, electrical systems and pneumatic systems all which are located on board the EOAT 10 for easy integration with any robotic system.

In FIG. 4A, EOAT 10 is illustrated as including the platform assembly 400, which includes linear actuator 410, linear rails 420A, 420B (also referenced herein as linear rails 420), linear rail mounts 422, linear slides 424A, 424B (also references herein as linear slides 424), robot mount 430, robot mount brackets 435A, 435B (also referenced herein as robot mount brackets 435), and forward cable tray 440. Other components included in the platform assembly 400 can include cable chain 450, rear cable tray 460, cable conduit 470, vacuum hose guide 480 and vacuum host capture assembly 270, and cable conduit guide 490, which are illustrated in various other figures. The platform assembly 400 includes linear actuator 410 that operates in conjunction with linear rails 420 and linear slides 424 to move vacuum head assembly 100 and head positioning mechanism 200 from a rear fully retracted position to a forward fully extended position along the linear rails 420. In this example, the linear actuator 410 is an air actuated device. However, the linear actuator 410 could also switched out for a lead screw or ball screw and motor actuated device, among other options. A lead screw and motor linear actuator could provide more positional control along the length of travel but would not operate as quickly as an air actuated linear actuator nor provide the compliance offered by the pneumatic option. In other examples, the linear actuator can be hydraulically actuated or utilize a linear electric motor, among other suitable mechanisms.

The platform assembly 400 includes robot mount 430 that physically interfaces EOAT 10 with a robotic arm or similar robotic device. In this example, the robot mount 430 is coupled to the linear rails 420 via robot mount brackets 435. In certain examples, the robot mount brackets 435 position the robot mount 430 at less than a 90 degree angle in reference to the linear rails 420. The positioning angle assists in ease of positioning of the EOAT 10 when coupled to a robotic arm. In any case the mounting of the EOAT on the robotic system can be adjusted for optimal performance in any given environment or application.

In this example, the sensor assembly 500 can include a camera module 510, a light module 520, and a sensor module 530. In certain examples, the camera module 510 can include a stereo vision, ToF, RGB or other sensor or camera that can provide depth information as well as visual information. In some examples, the sensor assembly 500 can include a distance sensor which can be a laser range finder or other device to determine distance.

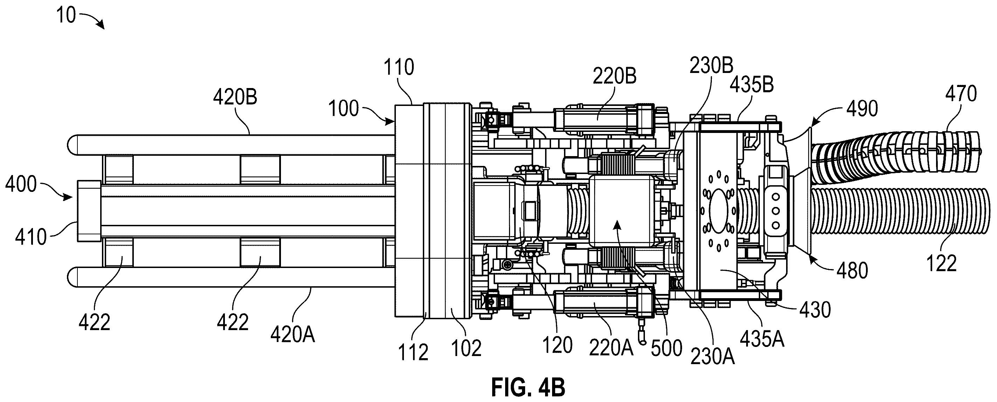

In FIG. 4B a top view of EOAT 10 is provided. In this example, the vacuum head assembly 100 is illustrated as including a vacuum head housing 102, a foam seal 110, a foam seal frame 112, a vacuum snorkel assembly 120, and a vacuum hose 122. A portion of the head positioning mechanism 200 is also illustrated in FIG. 4B, including head tilt actuators 220A, 220B (also referenced herein as head tilt actuators 220) and head pivot actuators 230A, 230B (also referenced herein as head pivot actuators 230). The illustrated design utilizes dual actuators for both head tilt and head pivot operations, but an alternative design can utilize one actuator for head tilt and head pivot or dual actuators for one function and a single actuator for another function. For example, the head pivot operation could be performed by a single head pivot actuator.

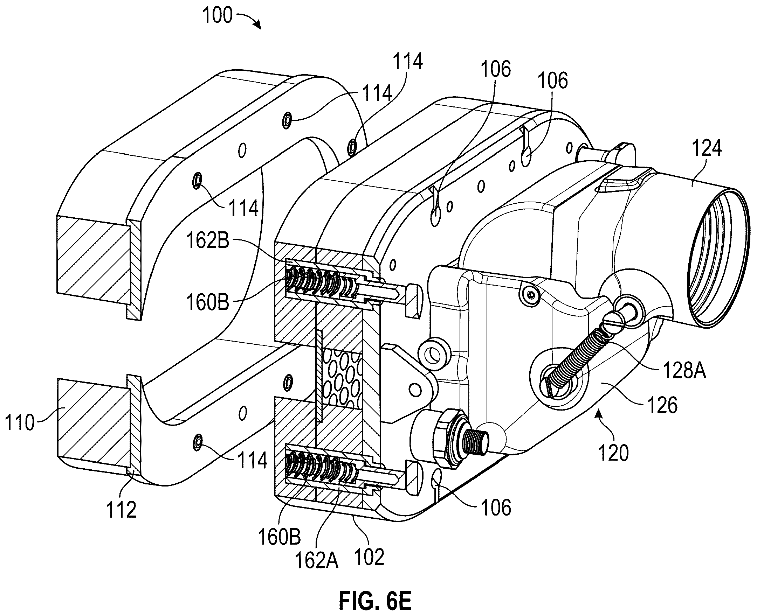

In this example, the vacuum head assembly 100 includes a foam seal 110. The foam seal 110 performs a pivotal function in engaging luggage in operation of the EOAT 10. The foam seal 110 provides a level of conformance to uneven surfaces and other obstructions, such as pockets, zippers, or handles when engaging a piece of luggage with EOAT 10. The foam seal 110 is specially designed for resilience with compliance and is also easily replaced as needed. It enhances both resilience and service ability, the foam seal 110 is mounted to a foam seal frame 112. The foam seal frame 112 includes a channel that receives the foam seal 110, which is secured to the foam seal frame 112 with an adhesive that is applied to the bottom and sides of the foam seal frame 112. The adhesive and foam seal frame 112 when assembled, prevent pealing of the foam seal 110 when subjected to shear stresses induced by baggage handling operations. The foam seal frame 112 is also easily removed from the vacuum head housing 102 via captured screws within the vacuum head housing 102 and threaded inserts in the foam seal frame 112 (some details of which are illustrated in FIG. 6E and discussed below). In some examples, the vacuum head assembly 100 can utilize a different vacuum seal configuration. In an example, the vacuum head assembly 100 can utilize a split foam seal setup. In a split foam seal arrangement, two smaller foam seals are positioned on the face of the vacuum head assembly in place of the foam seal 110. The split foam seals are otherwise similar to the foam seal 110. In other examples, an array of vacuum cups are positions across the front face of the vacuum head assembly 100 in place of the foam seal 110. In yet other examples, the foal seal 110 can be replaced with a conformal porous fabric gripper that routes vacuum throughout the porous fabric surface. Other vacuum gripping solutions known in the industry can also be adapted for use with the vacuum head assembly 100, as discussed above.

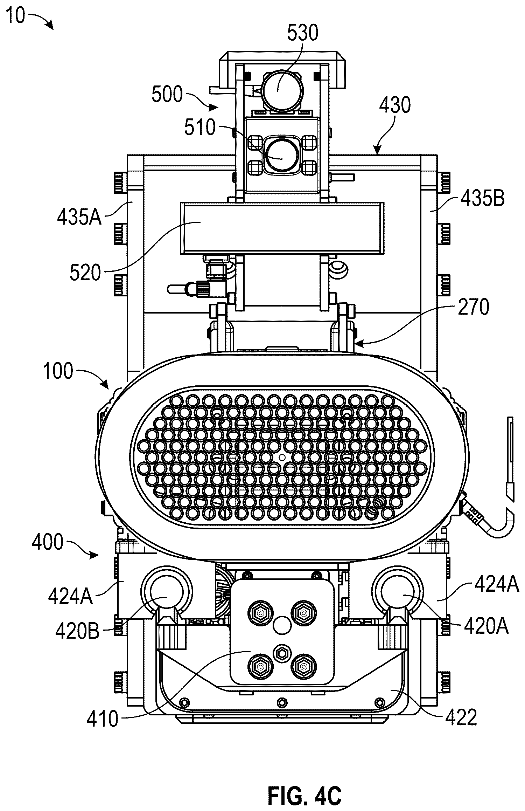

FIG. 4C is a front view of EOAT 10 with components such as the vacuum head assembly 100, platform assembly 400, and sensor assembly 500 illustrated. In this example, the positioning of linear actuator 410, linear rails 420, and linear slides 424 relative to vacuum head assembly 100 is shown. The forward most linear rail mount 422 is also depicted coupling together the linear actuator 410 and the linear rails 420. The front view also depicts how the robot mount 430 is held by opposing robot mount brackets 435A, 435B.

Perspective view of the EOAT 10 is illustrated in FIG. 4D with the vacuum head assembly 100 and head positioning assembly 200 extended fully forward on the platform assembly 400. Within the vacuum head assembly 100 the vacuum gate 104 is illustrated. The vacuum gate 104 distributes vacuum provided via the vacuum hose 122 and vacuum snorkel assembly 120 within the foam seal 110. The vacuum hose capture assembly 270 operates to control the position of the vacuum hose 122 as is extends back towards the robot mount brackets 435. As discussed further below, the vacuum hose capture assembly 270 is biased to pull the vacuum hose 122 down towards the platform assembly 400.

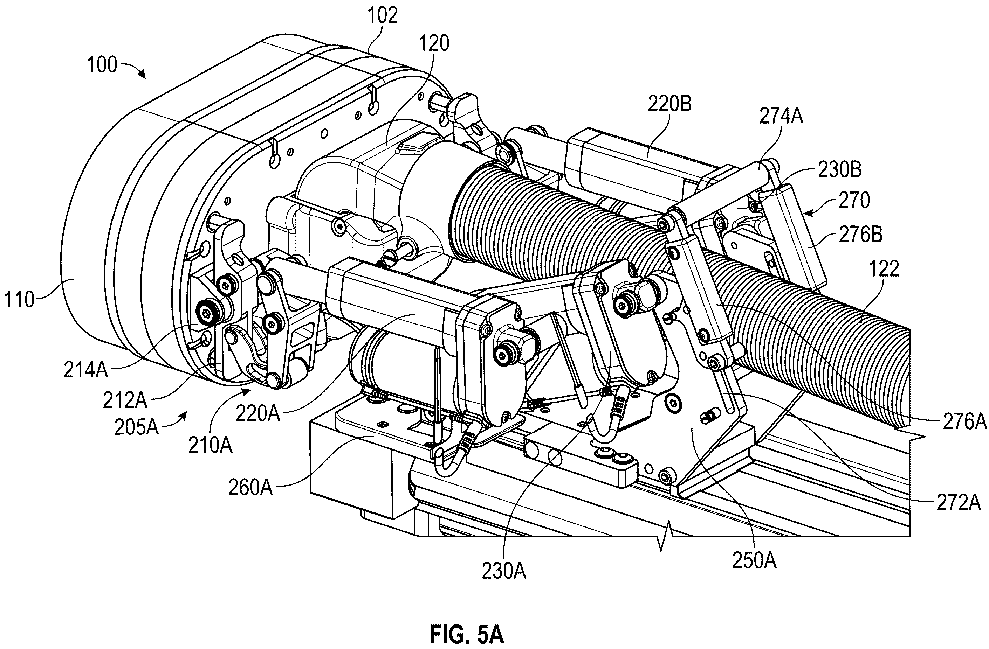

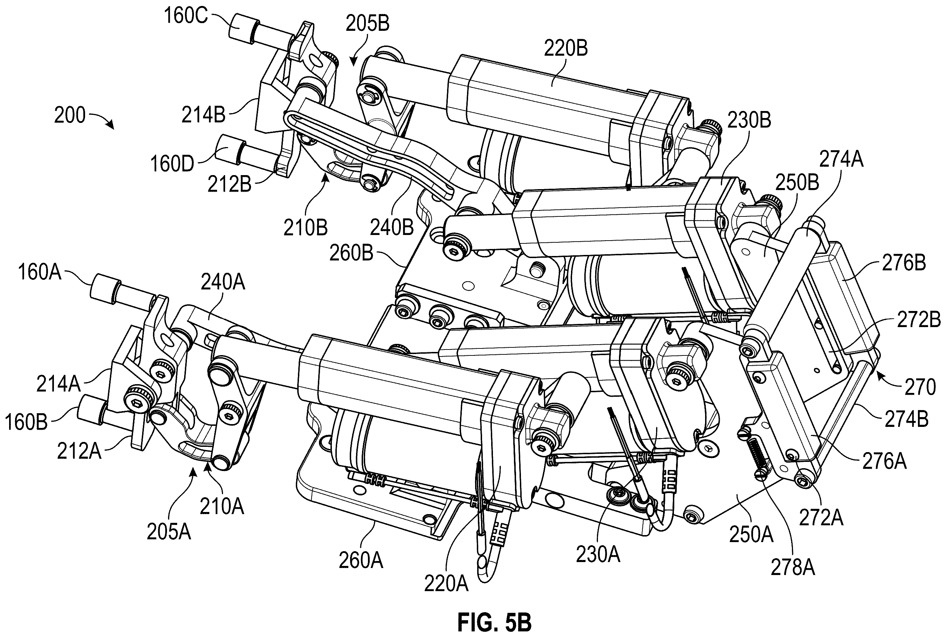

FIGS. 5A-5F are various views of a vacuum head positioning mechanism 200 used within EOAT 10. FIG. 5A isolates the vacuum head assembly 100 and the vacuum head positioning mechanism 200. FIG. 5B is a perspective view of the vacuum head positioning mechanism 200. In this example, the vacuum head positioning mechanism 200 includes head tilt assembly 205A 205B (also referenced herein as head tilt assembly 205). The head tilt assemblies 205 include tilt four bar linkages 210A, 210B (also referenced herein as tilt four bar linkages 210) and tilt levers 212A, 212B (also referenced herein as tilt levers 212). The tilt four bar linkages 210 and tilt levers 212 operate in conjunction with head tilt actuators 220 to provide at least 120 degrees of tilting motion to the vacuum head assembly 100. In certain examples, the tilt four bar linkages 210 are designed to produce the full range of tilt motion with as little as fifty (50) millimeters of actuator travel.

In this example, the head positioning mechanism 200 also includes head pivot linkages 240A, 240B that couple to head pivot actuators 230 to pivot the vacuum head assembly in a direction perpendicular to the linear rails 420. The head tilt assemblies 205 is coupled to the head pivot linkages 240 such that the tilt of the vacuum head assembly 100 is not impacted by pivoting. In other words, tilting and pivoting operations are independently controlled by the associated actuators.

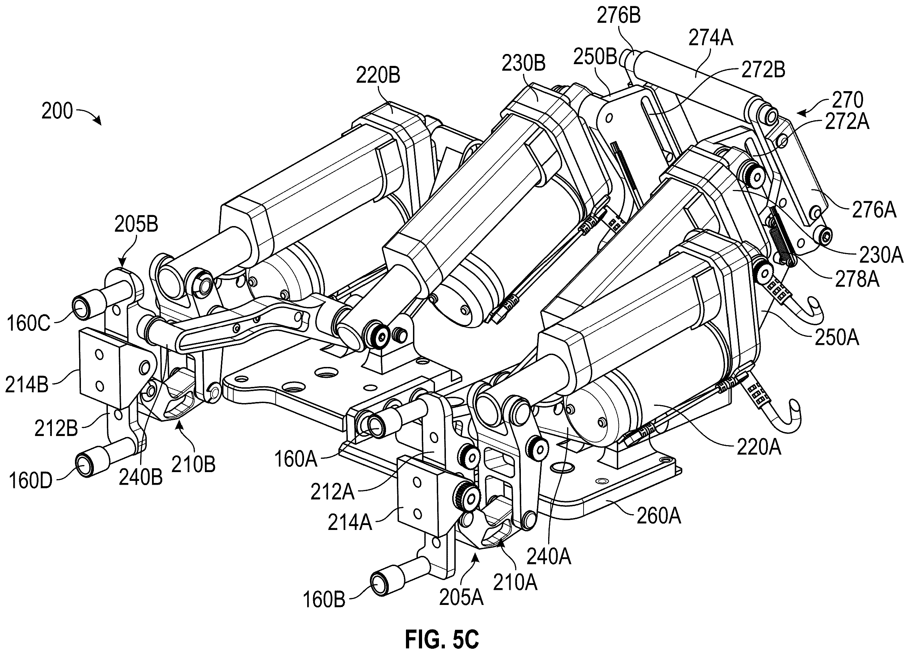

As illustrated in different perspective views in FIGS. 5B and 5C, the EOAT 10 also includes a passive tilt function for the vacuum head assembly 100. The passive tilt function allows the vacuum head assembly 100 to move a few degrees in response to external forces acting on the vacuum head assembly 100. The passive tilt function is controlled by passive head tilt bias members 160A, 160B, 160C, and 160D (also referenced herein as passive head tilt bias members 160 or simply passive bias members 160). In certain examples, the passive bias members 160 are pushed upward with springs, but could also be various other elastomers. The passive bias members 160 engage the head tilt levers 212 which are coupled to the vacuum head housing via head tilt couplers 214A, 214B (also referenced herein as head tilt couplers 214). The passive bias members 160 springs can be tuned for different operating environments with higher or lower spring constants to provide stiffer or softer passive tilting. In other words, if less passive tilting is useful in certain applications stronger springs can be used as passive tilt members 160. Conversely, if it is desirable to have the passive tilting of the vacuum head assembly 100 respond to lower external forces, then lower strength springs can be used with the passive tilt members 160. The range of spring pressure can vary pending the forces, orientations, and mechanical constraints of the specific application, but are usually between 8 and 201bs of spring force.

FIGS. 5B-5C also illustrate additional components of the vacuum hose capture assembly 270 including capture assembly slots 272A, 272B, hose rollers 274A, 274B, hose side guide brackets 276A, 276B, and capture assembly bias members 278A, 278B. The entire host capture assembly 270 can move within capture assembly slots 272A, 272B to allow for some movement of the vacuum hose 122 relative to the head positioning mechanism 200 and platform assembly 400. Movement of the hose capture assembly 270 within the capture assembly slots 272A, 272B is controlled by capture assembly bias members 278A, 278B. The vacuum hose 122 is held into the hose capture assembly 270 by hose rollers 274A, 274B and hose side guide brackets 276A, 276B.

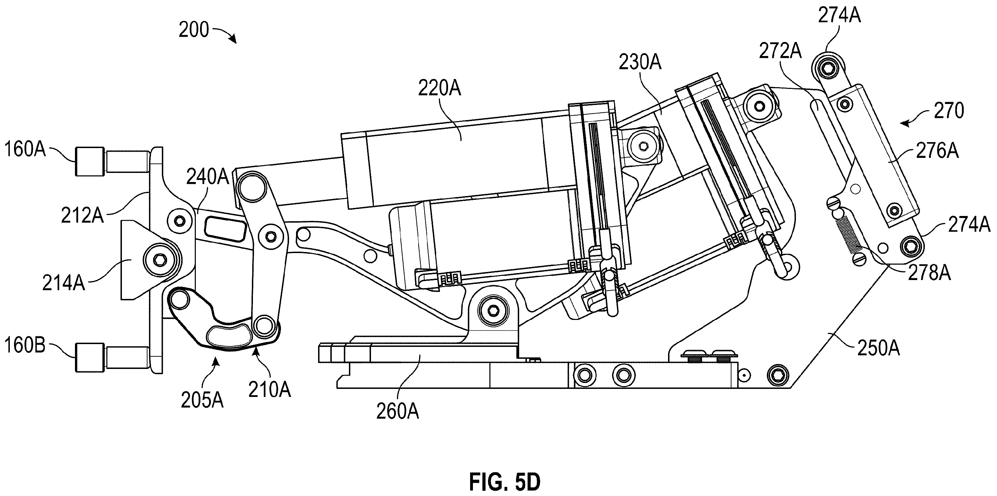

FIG. 5D is a side view of the head positioning mechanism 200 that provides an illustration of the different actuators couple to the various tilt and pivot linkages. In this example, the head tilt actuators 220 include an actuation rod coupled to one end of the tilt four bar linkage. The base of the head tilt actuators 220 are coupled to an end of the head pivot linkage 240 opposite the tilt levers 212, which are coupled to the opposite end of the head pivot linkages 240. The head pivot linkages 240 are designed to both move the vacuum head assembly 100 in a direction perpendicular to the linear rails 420 while also holding the fixed end of the head tilt actuators 220. The design of the head pivot linkages 240 and coupling of the head tilt actuators 220 allows for the tilt of the vacuum head assembly 100 to be maintained while pivoting. As illustrated, the head pivot linkage 240 includes a pivot point coupled to one of the actuator mounts 260A, 260B. The head pivot actuators 230 are coupled between the head pivot linkages 240 and actuator rear brackets 250A, 250B (also referenced herein as actuator rear brackets 250). These various connections are also visible in FIGS. 5A-5C in different perspectives.

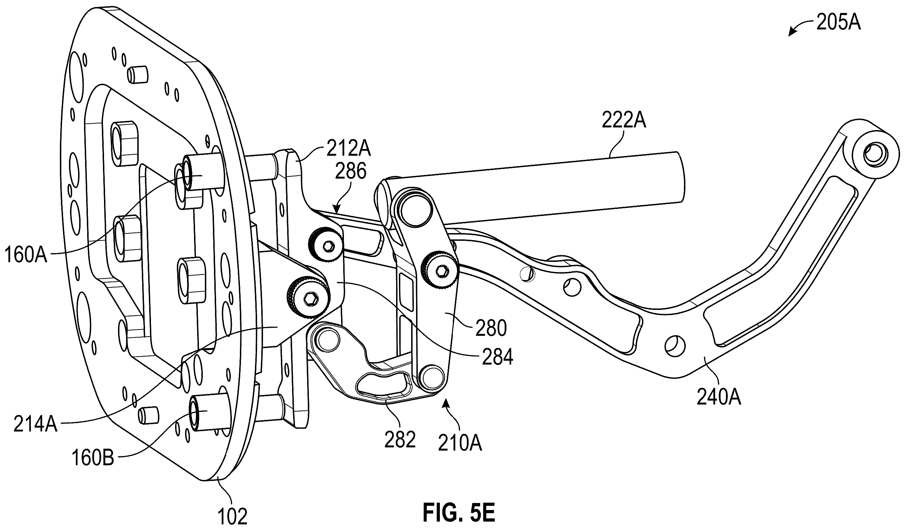

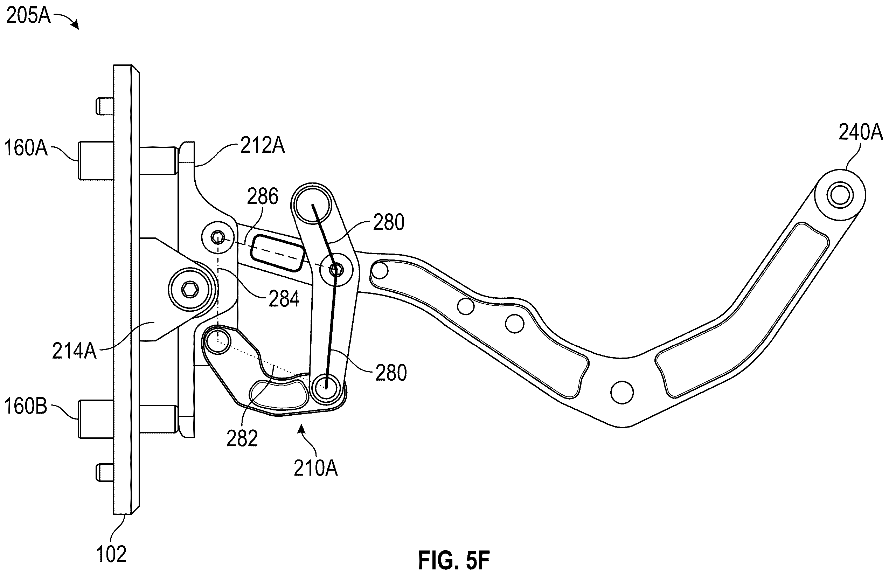

FIGS. 5E and 5F further isolate components of the head positioning mechanism 200 with illustration of just head tilt assembly 205A coupled to a rear portion of vacuum head housing 102. In this example, the actuator rod 222A of head tilt actuator 220A is illustrated coupled to a first link 280 of the tilt four bar linkage 210A. The first link 280 includes three pivot points, one coupled to actuator rod 222A, a second coupled to head pivot linkage 240A, and a third coupled to the second link 282 of the tilt four bar linkage 210A. The second link 282 includes just two pivots on either end one coupled to the first link 280 and the other coupled to a third link 284. The third link 284 is formed into a portion of the tilt lever 212A and includes two pivot points, the first coupled to the second link 282 and the second coupled to an end of the head pivot linkage 240A. The fourth link 286 is formed by an end portion of the head pivot linkage 240A that extends between the third link 284 and the first link 280. Each link of the tilt four bar linkage 210A is illustrated in a different line pattern annotation in FIG. 5F for clarity.

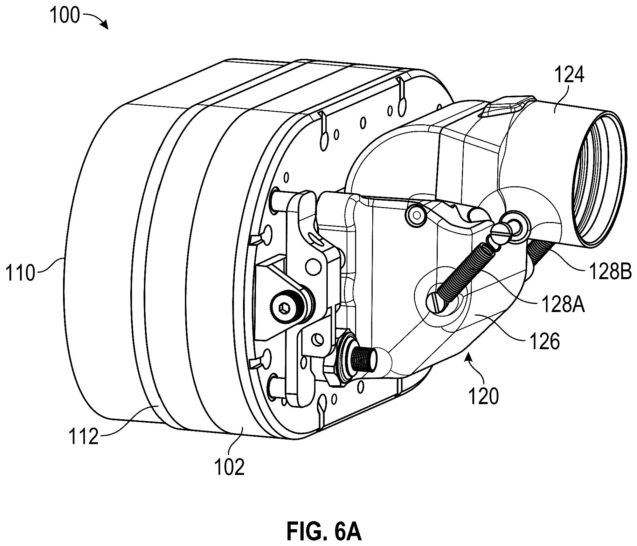

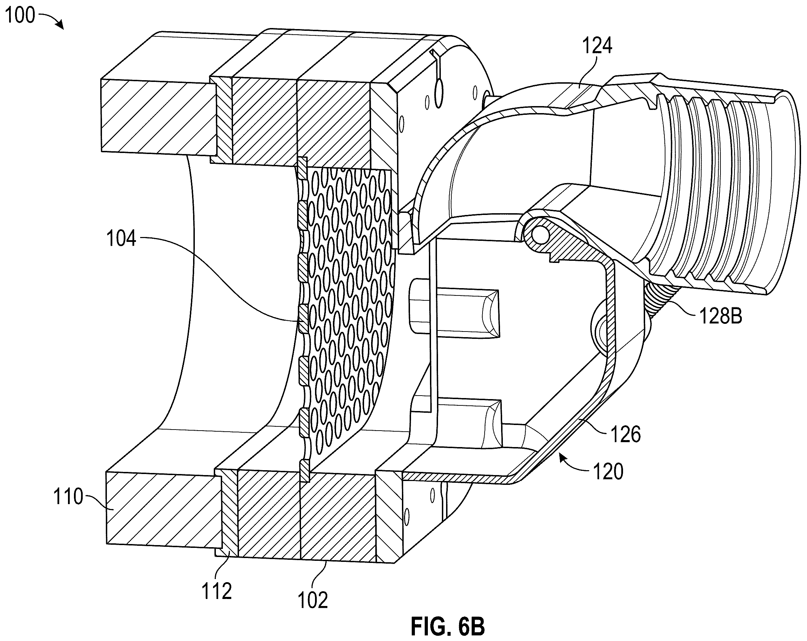

FIGS. 6A-6E are various view of the vacuum head assembly 100 used within the EOAT 10 for handling individual pieces of luggage. In this example, the vacuum head assembly 100 includes components, such as vacuum head housing 102, foam seal 110, foam seal frame 112, and the vacuum snorkel assembly 120. The vacuum snorkel assembly includes a snorkel pivot housing 124, a snorkel fixed housing 126, and snorkel hose bias members 128A, 128B (also referenced herein as snorkel bias members 128). FIGS. 6B through 6E are various cross sectional views of the vacuum head assembly 100 to illustrate various internal components.

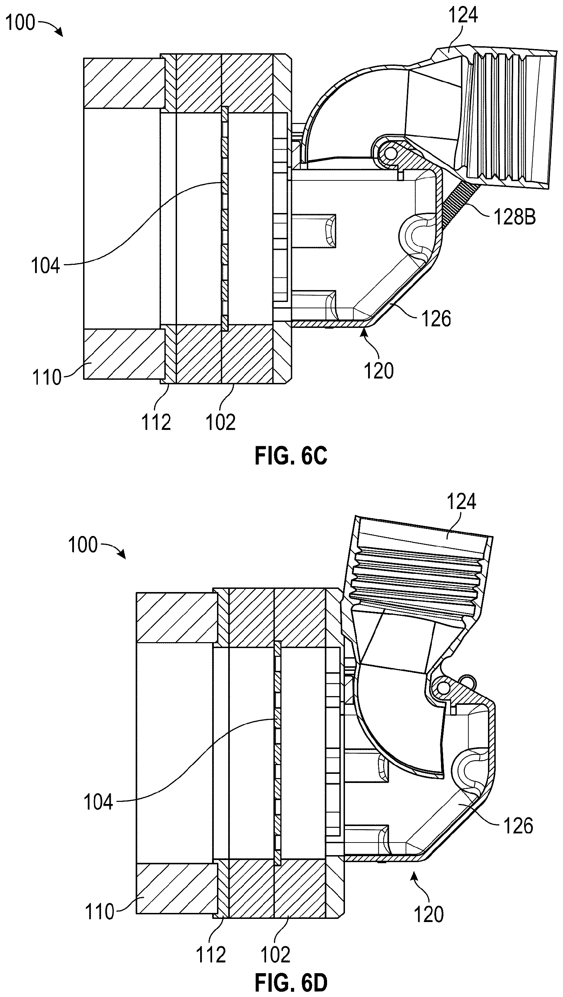

FIG. 6B is a perspective cross-sectional view and FIGS. 6C and 6D are side cross-sectional views of vacuum head assembly 100 that includes cross sections of the foam seal 110, the vacuum diffuser 104, the vacuum head housing 102, the foam seal frame 112 and the vacuum snorkel assembly 120. The cross sections of the foam seal 110 and foam seal frame 112 illustrate the channel created by the foam seal frame 112 to retain the foam seal 110. The cross section of the vacuum snorkel assembly 120 illustrated how the snorkel pivot housing 124 interoperates with the snorkel fixed housing 126 to deliver constant air flow and vacuum throughout the pivot range of the vacuum head assembly 100. In particular, FIGS. 6C and 6D illustrate the extreme positions of the snorkel pivot housing 124 relative to the snorkel fixed housing 126 with all positions maintaining a minimum cross-sectional area for vacuum air flow.

FIG. 6E is another perspective cross-sectional view of vacuum head assembly 100 that illustrates the passive tilt mechanisms, and the components designed to allow for easy exchange of the foam seal 110. The passive tilt mechanisms include the passive head tilt members 160 disposed within passive head tilt cavities 162A, 162B within the vacuum head housing 102. As illustrated, a portion of the passive head tilt bias members 160 extends out of the vacuum head housing 102 opposite the foam seal 110 to engage the tilt levers 212 as discussed above.

As mentioned above, the foam seal 110 is considered a wear item on EOAT 10 and will need occasional replacement to function optimally. Accordingly, the vacuum head assembly 100 includes various components to assist with easy exchange of the foam seal 110 and associated foam seal frame 112. In an example, the foam seal frame 112 includes a plurality of frame threaded inserts 114 to receive screws to secure the foam seal frame 112 to the vacuum head housing 102. The vacuum head housing 102 includes captured foam service screws 106. The references 106 on FIG. 6E point to cavities used to access foam service screws 106. The captured foam service screws 106 ease the replacement of the foam seal 110 and foam seal frame 112 by retaining the screws within the vacuum head housing 102. Service personnel only need to quickly unscrew the foam seal frame 112 and replace with a new one when service is required.

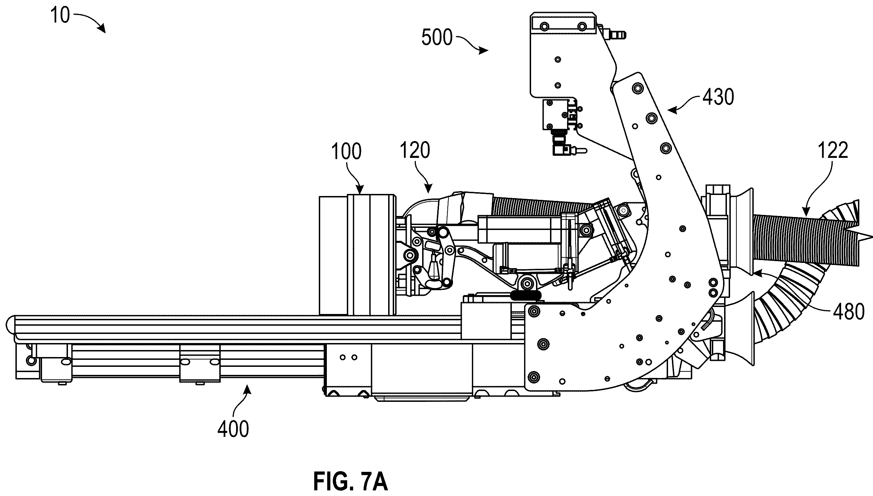

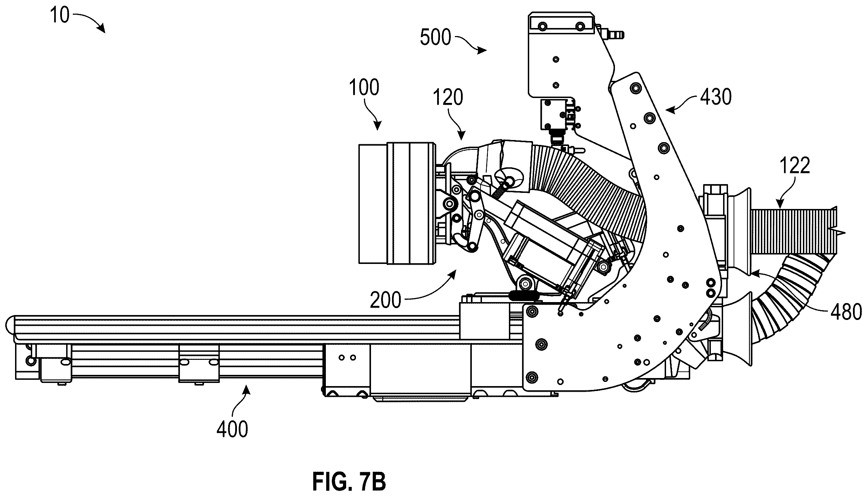

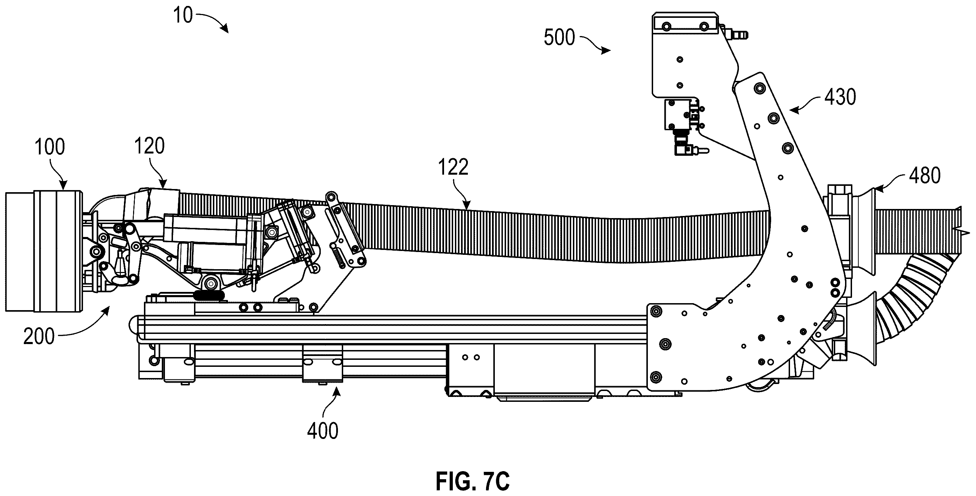

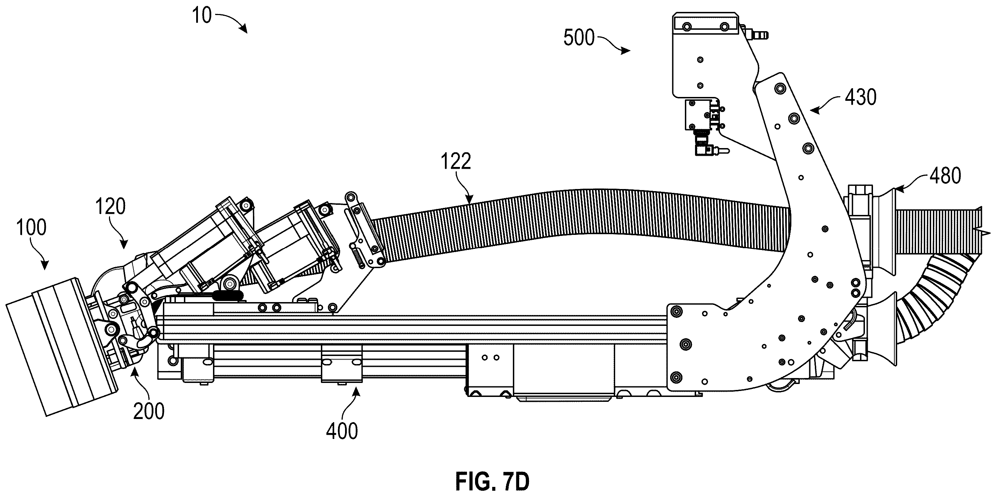

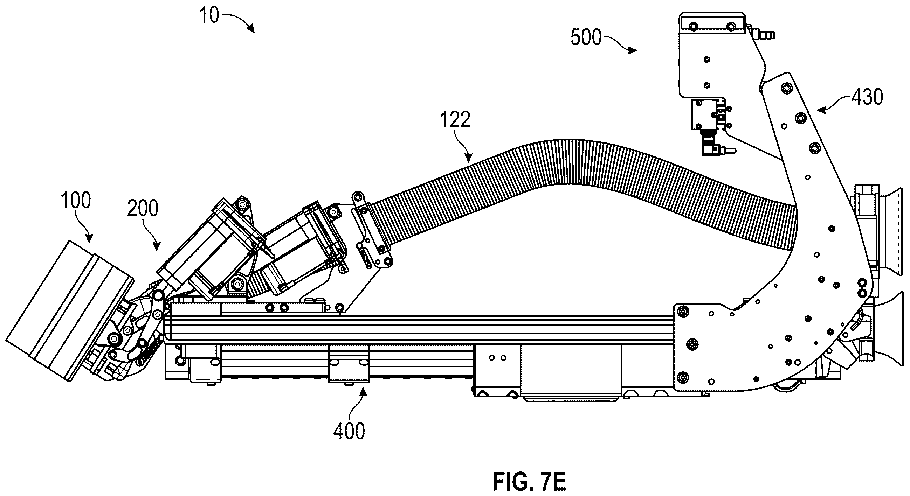

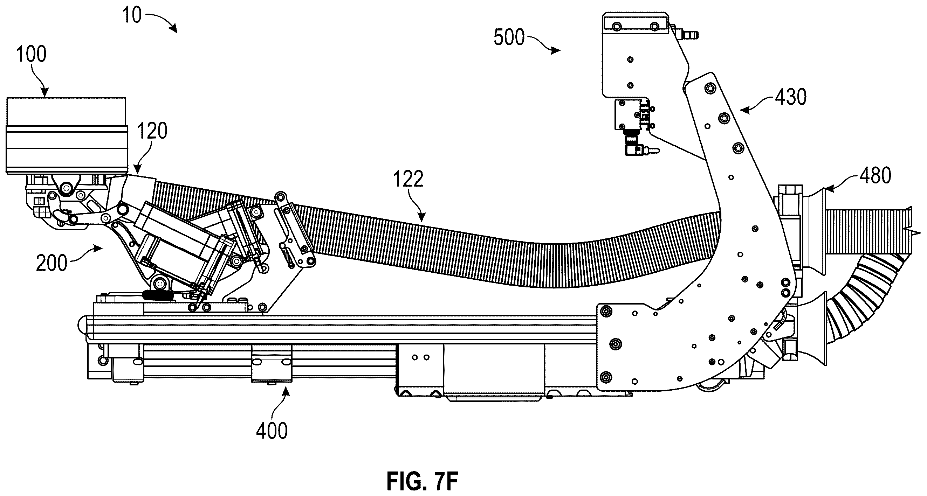

FIGS. 7A-7F are side views of the EOAT 10 demonstrating range of motion of the vacuum head and related components. In these figures, the vacuum head assembly 100 and head positioning mechanism 200 are illustrated across the entire range of motion of the EOAT 10. FIG. 7A illustrates the EOAT 10 with the vacuum head assembly 100 in a retracted, ready position. In an example, the ready position is the default position for the EOAT 10 when positioning for engagement of a piece of luggage. FIG. 7B illustrates the EOAT 10 with the vacuum head assembly 100 pivoted vertically away from the platform assembly 400. FIG. 7C illustrates the EOAT 10 with the vacuum head assembly 100 extended fully forward in a neutral pivot position, which is a primary bag engagement position. In certain examples, the primary bag engagement position is the default position for engaging a bag within a ULD or luggage cart. FIG. 7D illustrates the vacuum head assembly 100 in a fully forward position with the pivot lowered to the lowest position relative to the platform assembly 400. In this example, the vacuum head assembly 100 is also tilted downward relative to the platform assembly 400. In the extension position illustrated in FIG. 7D, the vacuum head assembly 400 can also pivot upward to a position, such as illustrated in FIG. 7E. Finally, in FIG. 7F the vacuum head assembly 100 is illustrated in a fully extended position with the pivot elevating the vacuum head assembly 100 away from the platform assembly 400 and with the vacuum head assembly 100 tilted upward to put the foam seal 110 in a position parallel to the linear rails 420 of the platform assembly 400. This final position can be used with the EOAT inverted to vertically pick up a piece of luggage. The EOAT 10 utilizes the sensor assembly 500 to target bags and adjust the extension position, tilt, and pivot of the vacuum head assembly 100 within the range of motion illustrated in FIGS. 7A-7F to optimize bag engagement.

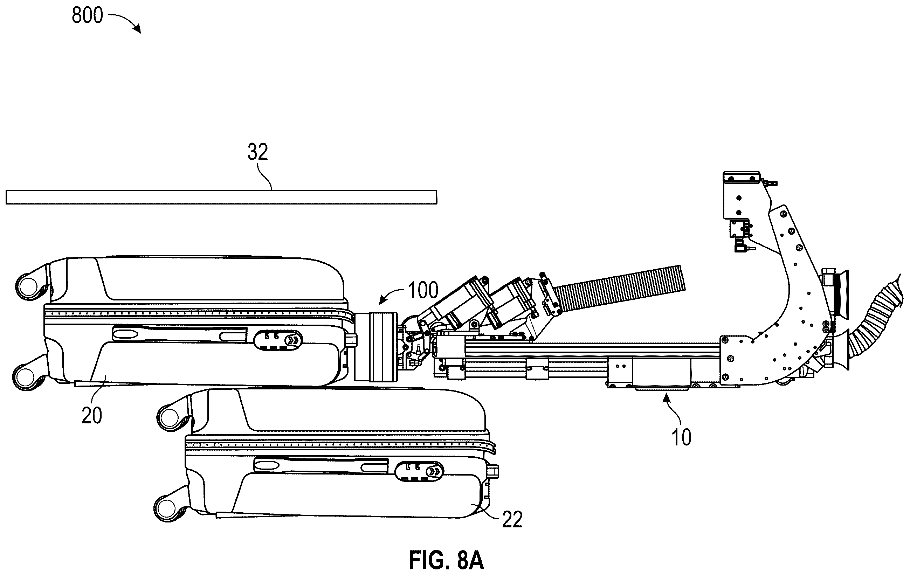

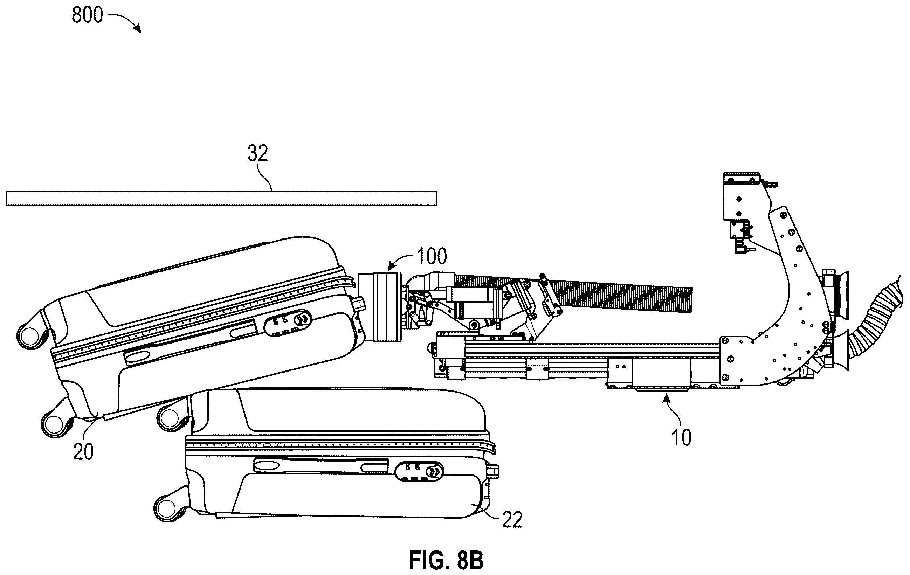

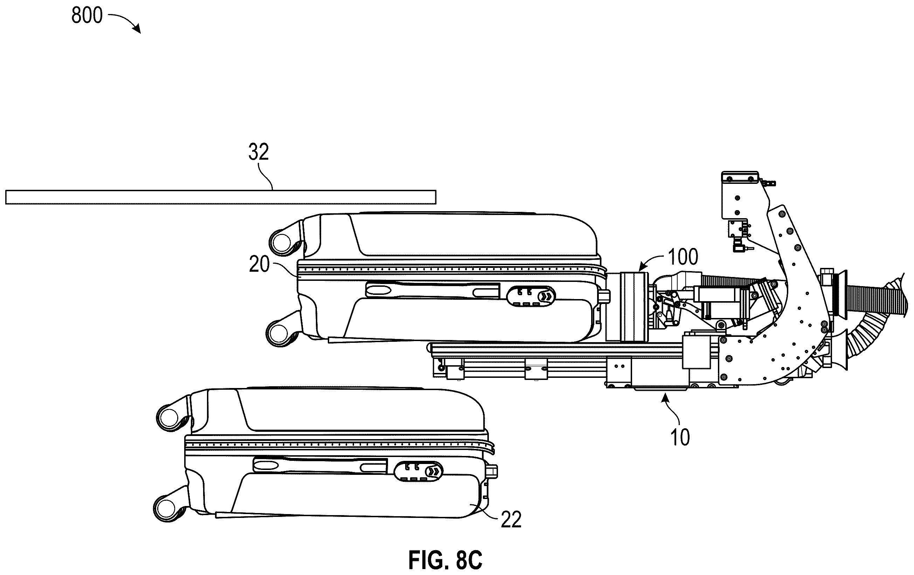

FIGS. 8A-11C are various side view illustrations depicting various luggage picking techniques enabled by the end of arm tool according to various example embodiments. FIGS. 8A-8C illustrate a standard flat bag picking technique that utilizes the pivot (height adjustment) aspect of the head positioning mechanism 200. In FIG. 8A, the bag picking technique 800 begins with the pivot mechanism (e.g., head pivot actuators 230 and head pivot linkage 250) adjusting the height of the vacuum head assembly 100 with the vacuum head assembly 100 positioned in a fully forward position by the linear actuator 410. The position of the EOAT 10 illustrated in FIG. 8A allows for the vacuum head assembly 100 to engage the top bag 20 without interference from the ULD ceiling 32 or the lower bag 22. Once the bag 20 is engaged by EOAT 10, the technique 800 shifts to the operation illustrated in FIG. 8B that involves the vacuum head assembly 100 pivoting upward (relative to the linear rails 420 to lift the forward portion of bag 20 off a lower bag 22 (or a floor of a ULD or luggage cart). Lifting the forward portion of bag 20 reduces the friction between bags and allows the EOAT 10 to pull the bag 20 onto the linear rails 420 as shown in the final operation of technique 800 illustrated in FIG. 8C. In FIG. 8C, the EOAT 10 is retracted using the linear actuator 410 to pull bag 20 onto the linear rails 420 and allow the robotic arm to move the EOAT 10 and bag 20 freely.

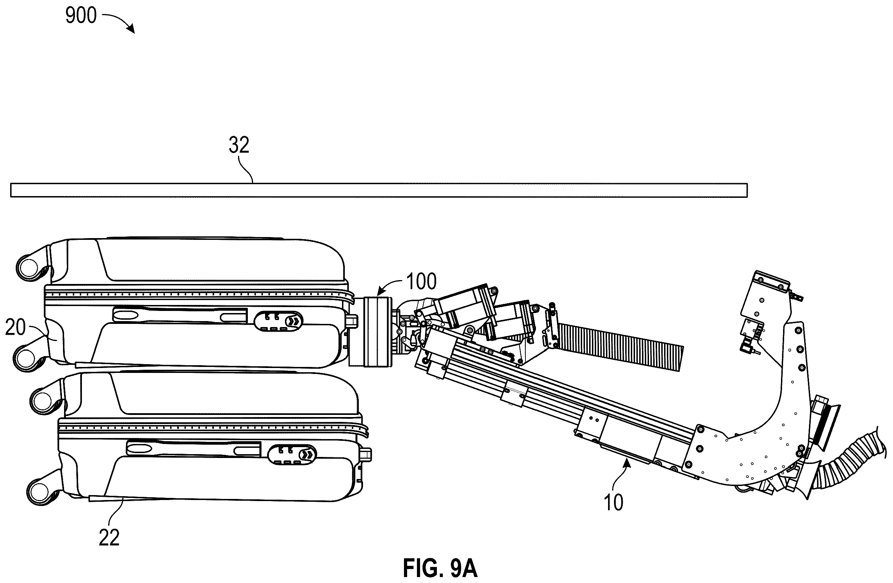

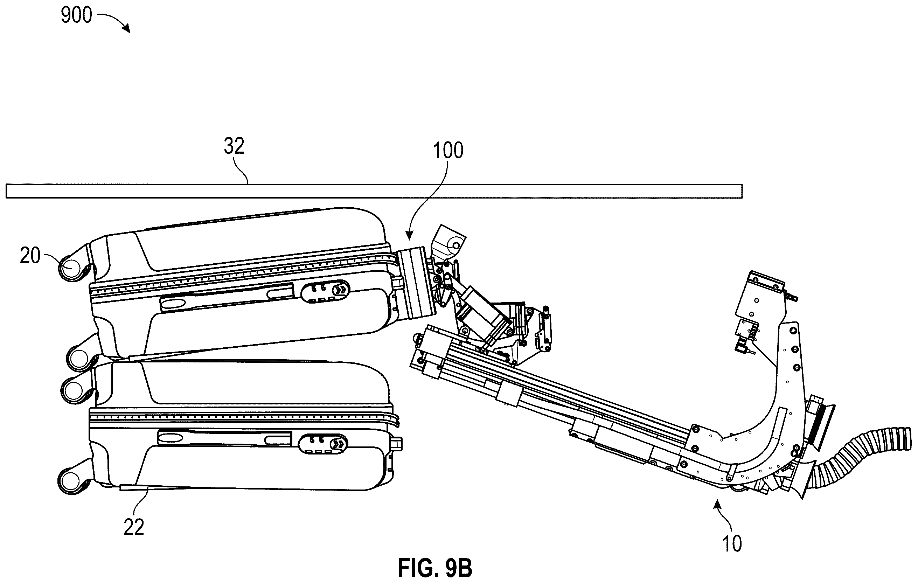

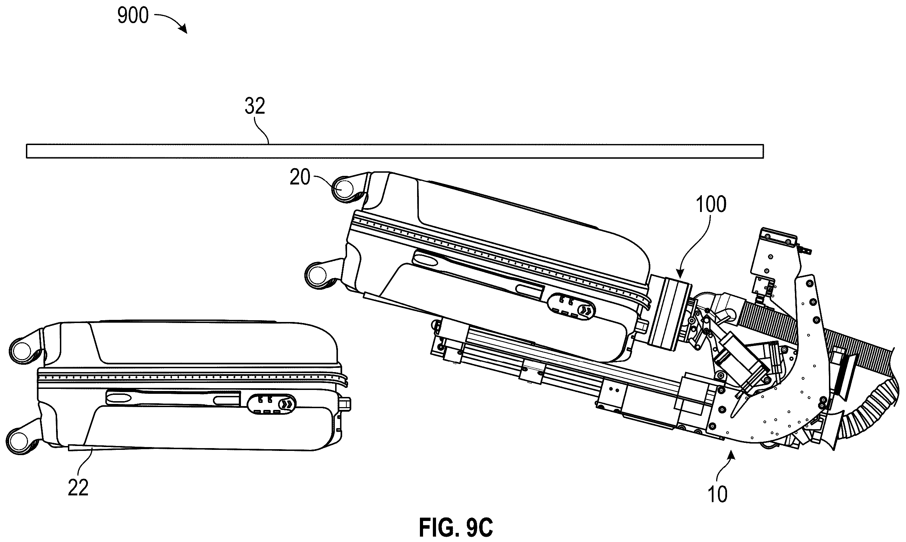

FIGS. 9A-9C illustrate a technique 900 for conducting a standard bag pick in a low overhead clearance environment. In technique 900, the EOAT 10 is positioned in a declined orientation to ease the function of pulling the bag 20 onto the linear rails 420. As illustrated in FIG. 9A, the EOAT 10 is positioned in. declined orientation (e.g., the proximal end of the EOAT 10 is below the bag 20 with the vacuum head assembly 100 extended fully forward and pivoted down even with or below the linear rails 420. FIG. 9B illustrates a second operation in technique 900 involving the EOAT 10 pivoting the vacuum head assembly 100 upward to lift the forward edge of bag 20 onto the linear rails 420 (similar to the second operation of technique 800 discussed above). Finally, technique 900 pulls bag 20 fully onto the EOAT 10 by retracting the vacuum head assembly 100 using the linear actuator 410. Similar to technique 800, technique 900 allows for picking a bag in an environment where ULD ceiling 32 (or similar overhead constraint) allows for limited vertical clearance.

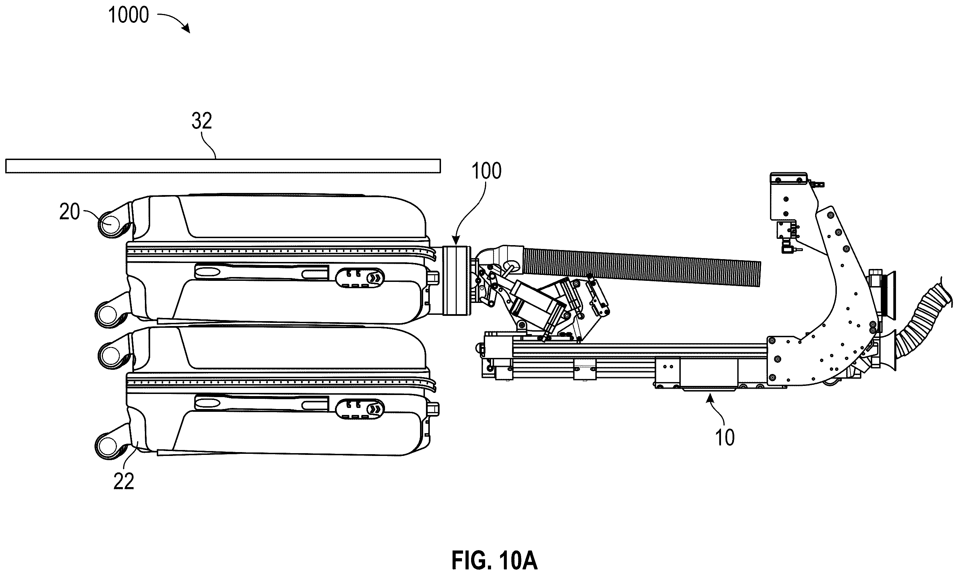

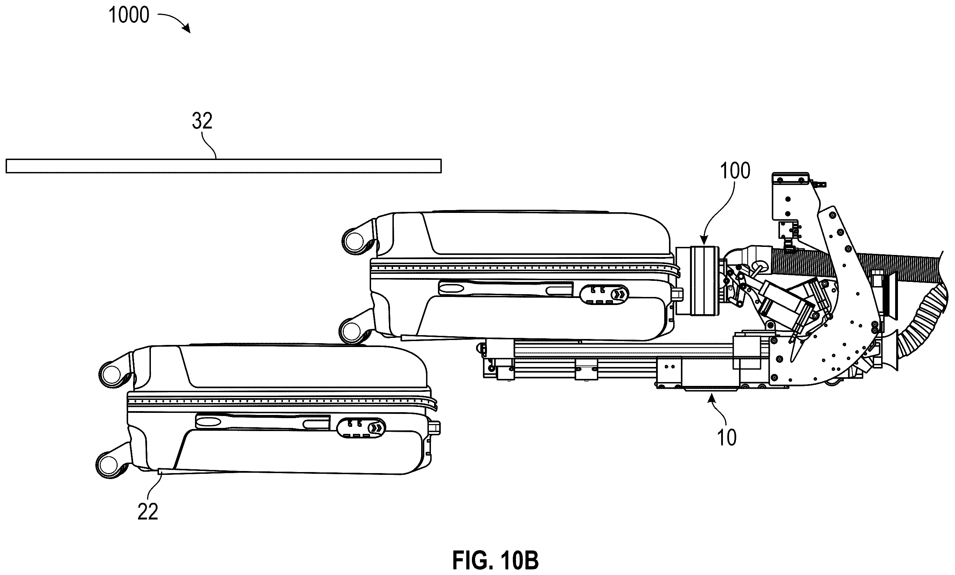

FIGS. 10A-10B illustrated a bag pick technique 1000 where the bag 20 is fully accessible and in a standard flat orientation without vertical clearance issues from ULD ceiling 32 or similar structures. In FIG. 10A, the vacuum head assembly 100 of EOAT 10 is extended forward in a neutral vertical (pivot) position. The EOAT 10 is positioned in a neutral orientation with the linear rails 420 roughly parallel to and vertically aligned with the bottom surface of bag 20. Once the vacuum head assembly 100 engages bag 20, the technique 1000 proceeds with extracting the vacuum head assembly 100 to pull bag 20 onto EOAT 10 as illustrated in FIG. 10B.

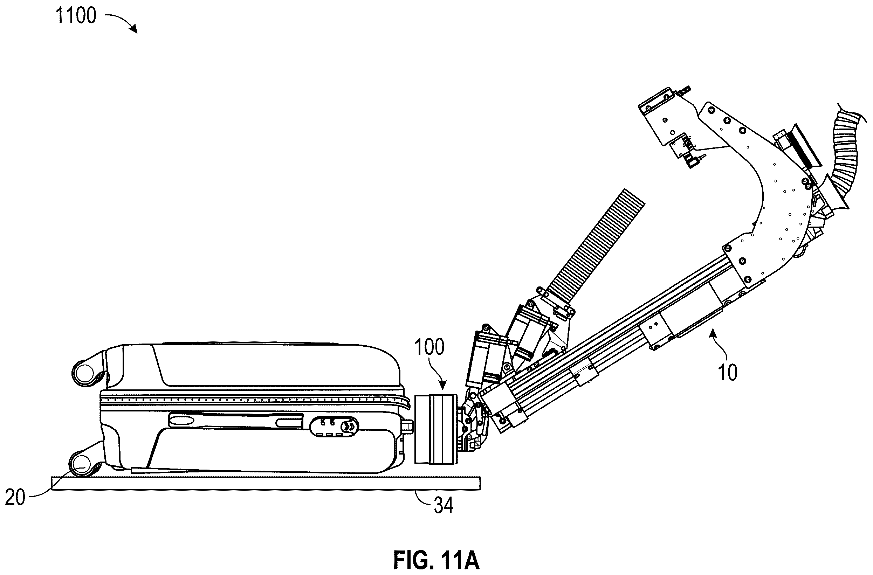

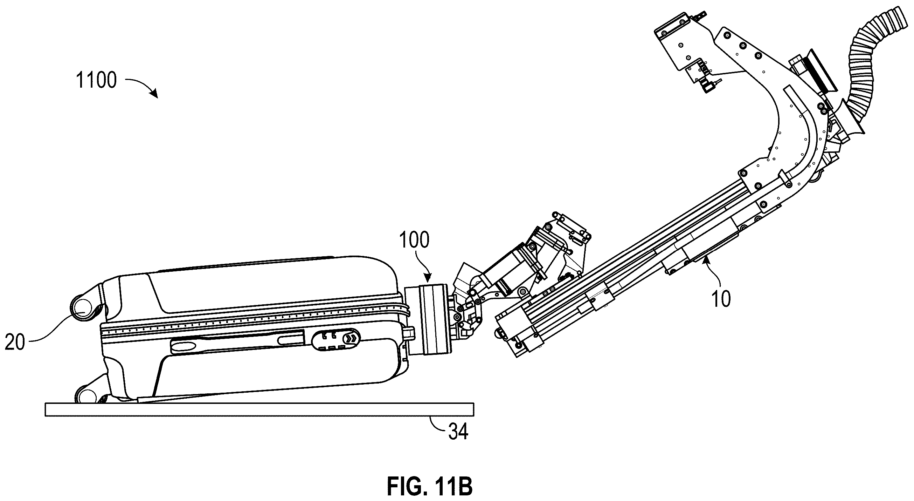

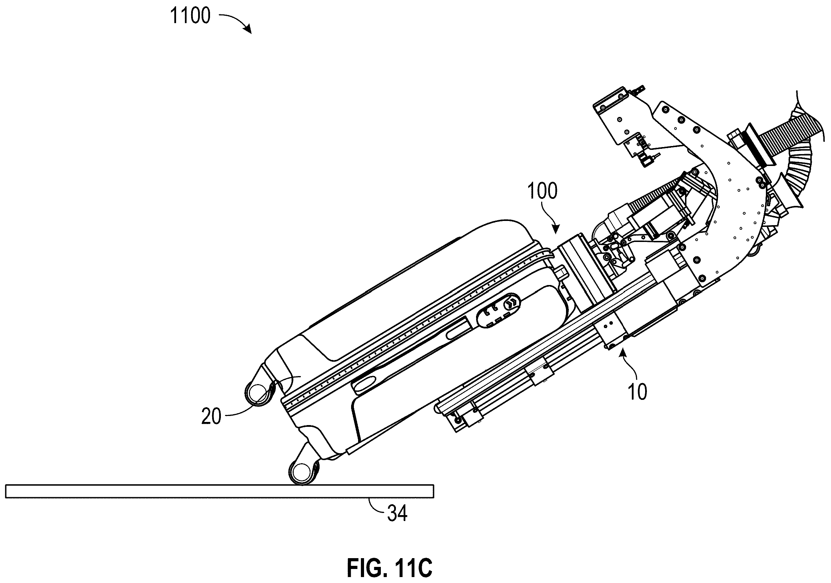

FIGS. 11A-11C illustrate a bottom bag pick technique 1100 that enables EOAT 10 to pull a bag 20 off a ULD base 34 (or similar lower supporting structure). Technique 1100 begins as illustrated in FIG. 11A with the EOAT 10 being oriented in an inclined orientation with the proximal end positioned higher vertically than the bag 20 and the vacuum head assembly 100 extended fully forward, pivoted down below the linear rails 420 and tilted back to properly engage bag 20. Once vacuum is made between the vacuum head assembly 100 and bag 20, the vacuum head assembly 100 is pivoted upward, lifting the forward edge of bag 20 as illustrated in FIG. 11B. As the vacuum head assembly 100 is pivoted upward, the linear actuator 410 is actuated to extract the vacuum head assembly 100 to pull the bag 20 onto the EOAT 10 as illustrated in FIG. 11C. Technique 1100 can assist in removing lower bags from a ULD or luggage cart with a lower lip around the edges, lifting the bag over the lower lip.

The discussion of techniques 800 to 1100 are intended to provide insights into baggage picking techniques enabled by the design of the EOAT 10 discussed within this document. The discussion of these techniques is intended to illustrate some of the many different baggage picking techniques enabled by the EOAT 10 and is not intended as an exhaustive discussion of all potential baggage picking techniques.

### Additional Notes

The above detailed description includes references to the accompanying drawings, which form a part of the detailed description. The drawings show, by way of illustration, specific embodiments in which the invention can be practiced. These embodiments are also referred to herein as "examples." Such examples can include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

All publications, patents, and patent documents referred to in this document are incorporated by reference herein in their entirety, as though individually incorporated by reference. In the event of inconsistent usages between this document and those documents so incorporated by reference, the usage in the incorporated reference(s) should be considered supplementary to that of this document; for irreconcilable inconsistencies, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

Methods and techniques described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, the code can be tangibly stored on one or more volatile or non-volatile tangible computer-readable media, such as during execution or at other times. Examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

The end of arm tool (e.g., EOAT 10) discussed throughout this disclosure is designed to be attached to various different robotic arms. The robotic arms can include controllers (e.g., computer systems) that can be programmed to cause the EOAT 10 to perform the various functions discussed herein. In other examples, a separate controller (e.g., computer system) can be used that controls both the robotic arm and the EOAT 10 to perform the functions of baggage handling discussed here. The computer system can include a processor, memory device, and network communications. The network communications can include typical ethernet and/or wireless communications in accordance with various known technologies as well as industrial communications such as controller area network (CAN) bus or similar protocols.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description, with each claim standing on its own as a separate embodiment, and it is contemplated that such embodiments can be combined with each other in various combinations or permutations. The scope of the invention should be determined with reference to the appended claims, along with the full scope of equivalents to which such claims are entitled.

## Claims

1. An end-of-arm tool for robotic baggage handling, comprising:
a vacuum head assembly including a vacuum head housing and a foam seal configured to engage a piece of luggage through vacuum suction;
a head positioning mechanism including an active tilt mechanism configured to provide angular movement of the vacuum head assembly; and
a head positioning mechanism including an active height adjustment mechanism configured to provide height adjustment of the head relative to the fork position in both a positive and negative direction; and
a platform assembly including a linear slide mechanism configured to extend and retract the vacuum head assembly along a longitudinal axis of a pair of linear rails configured to support the piece of luggage when the vacuum head assembly is retracted.

2. The end-of-arm tool of claim 1, further comprising a sensor assembly configured to provide position, orientation, depth, and feature data related to the piece of luggage;

3. The end-of-arm tool of any one of claims 1 and 2, wherein the active tilt mechanism provides at least 120 degrees of angular movement of the vacuum head assembly.

4. The end-of-arm tool of any one of claims 1 to 3, wherein the vacuum head assembly further comprises a regenerative blower suction system.

5. The end-of-arm tool of any one of claims 1 to 4, wherein the head positioning mechanism further includes a passive tilt mechanism configured to provide automatic alignment and self-centering.

6. The end-of-arm tool of claim 5, wherein the passive tilt mechanism includes passive head tilt bias members disposed within passive head tilt cavities in the vacuum head housing.

7. The end-of-arm tool of claim 1, wherein the active tilt mechanism comprises:
tilt four bar linkages coupled to tilt levers; and
head tilt actuators operatively connected to the tilt four bar linkages to control the angular movement of the vacuum head assembly.

8. The end-of-arm tool of claim 7, wherein the tilt four bar linkages are configured to produce the full range of tilt motion with approximately fifty millimeters of actuator travel.

9. The end-of-arm tool of any one of claims 1 to 8, wherein the head positioning mechanism further includes a head pivot system configured to pivot the vacuum head assembly in a direction perpendicular to the linear rails.

10. The end-of-arm tool of any one of claims 1 to 9, wherein the vacuum head assembly includes a vacuum snorkel assembly with a snorkel pivot housing and a snorkel fixed housing configured to maintain vacuum pressure throughout a pivot range of the vacuum head assembly.

11. The end-of-arm tool of any one of claims 1 to 10, wherein the foam seal is adhered to a removable foam seal frame secured to the vacuum head housing with screws captured within the vacuum head housing.

12. The end-of-arm tool of any one of claims 1 to 11, wherein the linear slide mechanism includes:
a linear actuator;
the pair of linear rails; and
linear bearings movably disposed on the pair of linear rails and supporting the vacuum head assembly and head positioning mechanism.

13. The end-of-arm tool of claim 12, wherein the linear actuator is pneumatically or electrically actuated.

14. The end-of-arm tool of any one of claims 1 to 13, wherein the sensor assembly includes a lighting module, stereo vision cameras, and distance sensors.

15. The end-of-arm tool of any one of claims 1 to 14, further comprising a robot mount configured to interface with at least one of 6DOF industrial robotic arms, custom robotic designs, or XY gantry systems.
